# EUROPEAN PATENT SPECIFICATION

(11) **EP 3 471 918 B1**
(45) Date of publication and mention of the grant of the patent: **15.04.2026**
(21) Application number: 16905362.6
(22) Date of filing: 16.06.2016
(51) Int. Cl.: B24D 18/00, B09B 3/00, C21D 1/53, C09K 3/14, F23C 10/18, F23C 10/00, B09B 3/20, B24C 9/00

(54) **METHOD FOR PRODUCING ABRASIVE MATERIAL**
VERFAHREN ZUR HERSTELLUNG VON ABRASIVEM MATERIAL
PROCÉDÉ DE PRODUCTION DE MATÉRIAU ABRASIF

(43) Date of publication of application: 24.04.2019
(73) Proprietor: Mirka Ltd., 66850 Jeppo (FI)
(72) Inventor: SUNDELL, Mats, 66970 Hirvlax/Uusikaarlepyy (FI); LEMBERG, Jari, FI-66800 Oravais (FI); STOOR, Mats, FI-65630 Karperö (FI); SCHUMACHER, Nicolas, FI-10210 Ingå (FI)
(74) Representative: Berggren Oy
(86) International application number: PCT/FI2016/050438
(87) International publication number: WO 2017/216415

(56) References cited:
- WO-A1-2011/092021
- DE-A1- 19 635 941
- US-A- 1 981 970
- US-A- 5 035 089
- US-A- 5 830 248
- US-B1- 6 805 618

## Description

### FIELD

Some versions relate to producing abrasive material.

### BACKGROUND

An abrasive item may comprise abrasive grains attached to a substrate. The protruding edges of the abrasive grains may become dull when the abrasive item is used for grinding a material. The abrasive item may also become clogged due to grinding dust. The abrasive item may have a useful operating life, which may be e.g. in the range of a few seconds to several hours. The abrasive item may be discarded at the end of its useful operating life. For example, a worn abrasive item may be buried in a landfill. Production of new abrasive items may incur considerable costs. Disposal of used abrasive items may incur considerable costs. Replacing a worn abrasive item with a new one may incur considerable costs.

DE 196 35 941A1, which is used as basis for the preamble of claim 1, discloses the recovery of abrasive grains from resin-bonded abrasive waste by thermal treatment in a fluidized bed, with the intention of reusing the grains in new abrasive products.

### SUMMARY

Some versions may relate to providing abrasive material. Some versions may relate to a method for providing abrasive material. Some versions may relate to an apparatus for providing abrasive material. Some versions may relate to producing an abrasive item. Some versions may relate to an apparatus for producing an abrasive item. Some versions may relate to an amount of abrasive material. Some versions may relate to processing of abrasive waste. Some versions may relate to an apparatus for processing abrasive waste.

According to the invention there is provided a method according to claim 1.

Further aspects are defined in the other claims.

Combustion of rejected abrasive items in a fluidized bed may provide loose abrasive grains, which may be utilized e.g. for producing new abrasive items. Loose abrasive grains may be provided when the substrate and/or adhesive of an abrasive item is burnt in the fluidized bed. In addition, combustion of the rejected abrasive items in a fluidized bed may provide a means for getting rid of rejected abrasive items.

Treatment of abrasive grains in the hot fluidized bed may increase the toughness of the abrasive grains. Treating the abrasive grains in the hot fluidized bed may improve the toughness of the abrasive grains e.g. by changing the chemical composition of the abrasive grains, and/or by changing the physical structure of the abrasive grains. In particular, treating the abrasive grains in the hot fluidized bed may improve the toughness of the abrasive grains by changing the crystal structure of the abrasive grains.

The abrasive grains may comprise alumina, i.e. aluminum oxide (Al₂O₃).

Treatment of the abrasive grains in the fluidized bed may e.g. locally increase the concentration of alumina. Treatment of the abrasive grains in the fluidized bed may e.g. change the oxidation state of titanium ions in the alumina crystals. The abrasive grains may comprise titanium as ions contained in the crystal structure and/or as titanium compounds. The abrasive grains may comprise e.g. Ti³⁺ ions and/or Ti⁴⁺ ions contained in the crystal lattice of aluminum oxide Al₂O₃. The abrasive grains may also comprise e.g. titanium oxide TiO₂. The treated abrasive material may comprise one or more abrasive grains which comprise increased concentrations of alumina and/or titanium.

The abrasive grains may be kept at the elevated temperature of the bed during a sufficient time period in order to change the composition and/or structure of the abrasive grains. The operating conditions of the fluidized bed may be controlled such that the average temperature of the fluidized bed is maintained in a predetermined range, and material streams fed into the fluidized bed and extracted out of the fluidized bed may be controlled such that the average residence time of the abrasive grains in the fluidized bed is greater than a predetermined value.

Treatment of the abrasive grains in the fluidized bed may add new sharp edges to the abrasive grains, due to deposition of slag onto the surface of the grains. The abrasive material may comprise one or more abrasive grains which have a tough and hard layer of slag deposited on the grains. Treatment of the abrasive grains in the fluidized bed may increase roughness of the abrasive grains, due to deposition of slag on the surface of the grains. Consequently, the abrasive grains may be more firmly attached to the adhesive layer, when making new abrasive items from the treated grains. Deposition of slag on the abrasive grains may improve adhesion of the grains to the substrate of a new abrasive item.

The term "slag" may mean mineral material, which has been firmly deposited on the abrasive grains in the fluidized bed. The slag may remain attached to the abrasive grains after removal of the abrasive grains from the fluidized bed reactor. The composition of the input materials and the operating conditions of the fluidized bed may be controlled such that slag may be firmly adhered to the surface of the abrasive grains. The slag deposited on the abrasive grains may comprise hard regions and/or soft regions. The soft regions may be etched away so that the deposited material, which remains attached to the abrasive grains, may substantially consist of hard slag. The soft regions may be etched away e.g. by washing the abrasive grains in acid, after the grains have been separated and treated in the fluidized bed.

The treated abrasive grains obtained from the fluidized bed may be loose so that they are not sintered together. Particle-particle collisions and particle-wall collisions in the bed may reduce sintering and agglomeration in the bed. The temperature of the bed may be kept in a predetermined range, and the movement of the particles in fluidized bed may effectively break up agglomerates, which might otherwise be formed during combustion.

In an embodiment, abrasive grains extracted from the fluidized bed may be washed with acid. The acid may etch away loosely bound substances from the abrasive grains so that the resulting abrasive grains may have a tough and/or rough surface suitable for grinding purposes.

Combustion of discarded abrasive items in the fluidized bed may provide loose abrasive grains for re-use. Using the recovered abrasive grains may reduce the need for using new abrasive grains.

The combustion may provide a means for disposing of abrasive waste. The combustion may provide thermal energy, which may be used for useful purposes. Producing loose grains by combustion of an abrasive item and reusing the grains may substantially reduce the carbon footprint of said abrasive item. The combustion of discarded abrasive items may reduce consumption of fuels. The combustion may reduce the need for transporting new abrasive grains to a manufacturing plant and/or may reduce the need for transporting waste away from the manufacturing plant. The combustion may reduce the need for burying waste into a landfill. The combustion of discarded abrasive items may provide a reserve supply of re-usable abrasive grains.

Treatment in the fluidized bed may improve the grinding properties of abrasive grains. The grinding efficiency of an abrasive item produced from the treated abrasive grains may be higher than the grinding efficiency of a reference abrasive item produced from non-treated abrasive grains, even in a situation where the reference abrasive item would have the same grit size, the same number of grains per unit area, and the same structural material layers. In an embodiment, the improvement of the grinding efficiency obtained by the treatment may be e.g. higher than 5%, higher than 10% or even higher than 20%, when compared with the reference abrasive item.

The usable lifetime of the abrasive item may be improved e.g. because the abrasive grains may have improved toughness and/or because the abrasive grains may have improved adhesion to the substrate.

In an embodiment, the amount of adhesive used for producing an abrasive item may be reduced thanks to the improved adhesion of the treated abrasive grains. Thus, the manufacturing costs of the abrasive item may be reduced. Furthermore, the surface fraction of the abrasive grains covered by the adhesive may be reduced so that the grains may protrude more with respect to the surface portions located between the abrasive grains. Consequently, the abrasive item may have a reduced tendency of becoming clogged during grinding.

The abrasive grains may be hard and chemically stable. The composition of the abrasive grains may be selected such that they are not substantially degraded due to biodegradation or due to electrochemical corrosion at the room temperature (i.e. at 25°C). The stable nature of the abrasive grains may allow re-use of the abrasive grains. This may improve the sustainability of the life cycle for the abrasive product e.g. by reducing the loss of useful materials derived from production residues and/or from materials produced during process malfunctions.

A manufacturing plant may be arranged to produce abrasive materials so that the manufacturing plant may also produce one or more side stream materials. The side stream materials may be at least partly re-used by processing them in the fluidized bed. For example, a side stream material may comprise abrasive grains, which have not been properly coated. For example, a side stream material may comprise defective abrasive items, which do not meet predetermined one or more quality criterions. For example, a side stream material may comprise cutting residues. For example, a side stream material may comprise pieces of abrasive cloth. Grains contained in the side stream material may be re-used as abrasive grains after they have been treated in the fluidized bed.

### BRIEF DESCRIPTION OF THE DRAWINGS

In the following examples, several versions will be described in more detail with reference to the appended drawings, in which
- Fig. 1a: shows providing loose abrasive grains by combustion in a fluidized bed,
- Fig. 1b: shows providing abrasive grains by combustion and cleaning,
- Fig. 1c: shows providing loose abrasive grains by combustion in a fluidized bed,
- Fig. 1d: shows providing abrasive grains by combustion and cleaning,
- Fig. 2a: shows, by way of example, providing loose abrasive grains by combustion in a fluidized bed,
- Fig. 2b: shows, by way of example, providing loose abrasive grains by combustion in a fluidized bed,
- Fig. 3a: shows, by way of example, particles of a fluidized bed,
- Fig. 3b: shows, by way of example, particles of treated material extracted from the reactor,
- Fig. 3c: shows, by way of example, cleaned particles of abrasive material,
- Fig. 4: shows cleaning particles of the treated material,
- Fig. 5: shows, by way of example, cleaned particles of the treated material extracted from the bed,
- Fig. 6: shows separating particles of different sizes,
- Fig. 7a: shows, by way of example, producing an abrasive item,
- Fig. 7b: shows, by way of example, in a cross sectional side view, an abrasive item, which comprises a size coat layer and a top coat layer,
- Fig. 7c: shows, by way of example, in a three dimensional view, an abrasive item,
- Fig. 7d: shows, by way of example, in a cross sectional side view, an abrasive item,
- Fig. 7e: shows, by way of example, in a cross sectional side view, dimensions and edges of an abrasive grain,
- Fig. 7f: shows, by way of example, in a cross sectional side view, protruding edges of abrasive grains,
- Fig. 7g: shows, by way of example, in a cross sectional side view, controlling the orientations of abrasive grains by using an electric field,
- Fig. 7h: shows, by way of example, in a cross sectional side view, controlling the orientations of abrasive grains by using an electric field,
- Fig. 7i: shows, by way of example, in a three dimensional view, an abrasive disk,
- Fig. 8: shows, by way of example, method steps for producing abrasive material, and
- Fig. 9: shows, by way of example, in a three dimensional view, a test set-up for measuring grinding efficiency.

### DETAILED DESCRIPTION

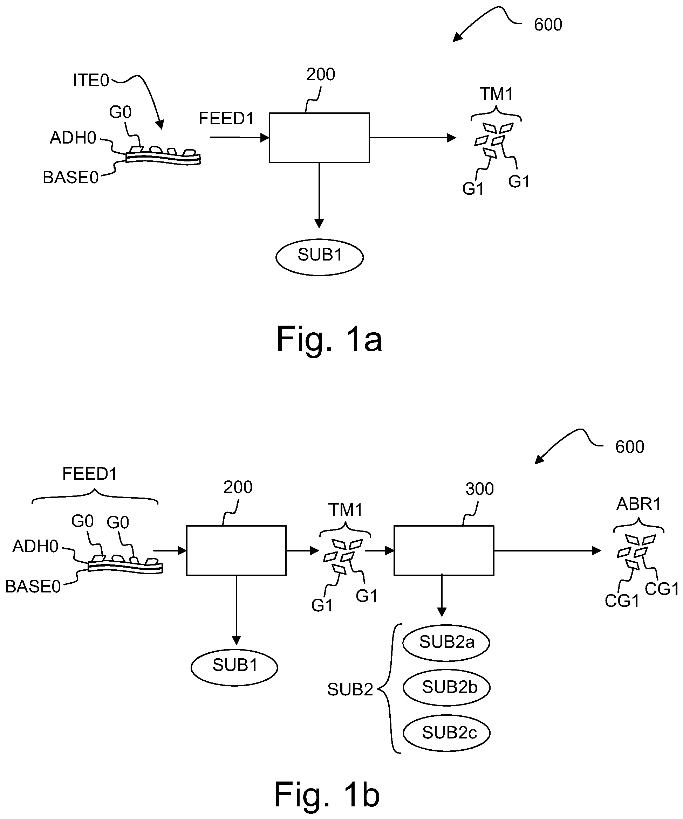

Referring to Fig. 1a, loose abrasive grains G1 may be provided by combusting input material FEED1 in a fluidized bed reactor 200. An apparatus 600 for producing abrasive material may comprise a fluidized bed reactor 200. The fluidized bed reactor 200 may be arranged to provide treated material TM1, which comprises loose abrasive grains G1. The treated material TM1 may be provided from the input material FEED1 by using the fluidized bed reactor 200. The input material FEED1 comprises a plurality of abrasive grains G0 attached to a substrate BASE0. The abrasive grains G0 may be attached to the substrate BASE0 e.g. by an adhesive ADH0. The substrate BASE0 may comprise combustible material and/or the adhesive ADH0 may comprise combustible material such that the grains G0 may become loose by combusting the substrate BASE0 and/or by combusting the adhesive ADH0.

The abrasive grains G0 may comprise e.g. aluminum oxide Al₂O₃, silicon carbide SiC, cubic boron nitride (c-BN), or diamond. In particular, the abrasive grains G0 may comprise fused aluminum oxide Al₂O₃ and titanium ions. The adhesive ADH0 may comprise e.g. a resin, glue and/or varnish. In particular, the adhesive ADH0 may comprise a phenolic resin and/or a urethane adhesive. The substrate BASE0 may comprise e.g. plastic film, a woven textile made from combustible fibers (i.e. cloth), paper, a sheet comprising vulcanized fibers. The substrate BASE0 may comprise one or more layers selected from the list above. The substrate BASE0 may be flexible. The input material FEED1 may comprise flexible substrate material BASEO, which is at least partly combustible. The input material FEED1 may also comprise pieces of abrasive items, which comprise a sizing coat layer and a top coat layer, in addition to the substrate, adhesive and the abrasive grains. The sizing coat may also comprise combustible adhesive material.

In an embodiment, the substrate BASE0 may also be arranged to operate as the adhesive ADH0. For example, the substrate BASE0 may comprise resin reinforced with fibers. In an embodiment, the substrate BASE0 may also comprise incombustible material e.g. metal wires and/or filler material particles.

The input material FEED1 may comprise a plurality of separate pieces of abrasive items. For example, the input material FEED1 may comprise residual pieces of abrasive cloth provided when cutting predetermined shapes away from a new sheet of abrasive cloth. For example, the input material FEED1 may comprise abrasive items which have been rejected in a quality inspection. For example, the input material FEED1 may comprise used and/or worn abrasive items ITE0 which have been used for grinding purposes. The input material FEED1 may be obtained e.g. by collecting one or more abrasive items ITE0, which have been used for grinding a material. The input material FEED1 may be obtained e.g. from a factory, which produces abrasive items. Abrasive items ITE0 may be discarded e.g. when they do not pass a quality inspection. The input material FEED1 may be obtained e.g. by collecting residual abrasive material, which may be formed as a by-product when cutting predetermined shapes away from an abrasive sheet.

The discarded abrasive items ITE0 may also be e.g. grinding disks, grinding wheels and/or cut off wheels, which may comprise abrasive grains and a combustible binder, e.g. resin. The input material FEED1 may comprise pieces of grinding disks, grinding wheels and/or cut off wheels. The pieces may be produced e.g. by crushing the items ITE0.

The input material FEED1 may comprise a plurality of abrasive grains, wherein each worn abrasive grain G0 comprises at least one dull edge E2. Each worn abrasive grain G0 may comprise at least one dull edge E2 formed by grinding. The input material FEED1 may comprise a plurality of abrasive grains, wherein at least 5% of said abrasive grains may be worn abrasive grains, and wherein each worn abrasive grain G0 comprises at least one dull edge E2. The input material FEED1 may comprise a plurality of worn abrasive grains. The input material FEED1 may comprise a plurality of abrasive grains such that each abrasive grain has a protruding edge E1, E2, wherein at least 5% of the protruding edges of the input material FEED1 are dull edges E2.

In addition to the loose grains G1, combustion in the fluidized bed may produce one or more output substances SUB1, e.g. carbon dioxide CO₂, water vapor H₂O, and ash.

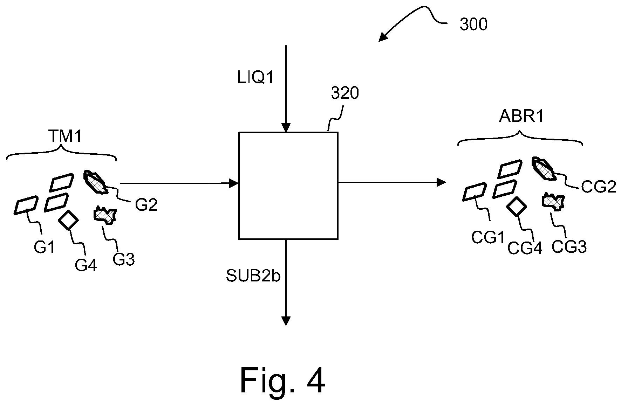

Referring to Fig. 1b, the production apparatus 600 may further comprise a cleaning unit 300 for producing cleaned grains CG1 from the treated material TM1. The cleaning unit 300 may comprise e.g. a washing unit 320 (Fig. 4). The apparatus 600 may be arranged to produce abrasive material ABR1, which comprises cleaned abrasive grains CG1. In addition to the cleaned abrasive grains CG1, the cleaning unit 300 may provide one or more residual substances SUB2, e.g. ash particles SUB2a separated from the treated material TM1 and/or contaminated washing liquid SUB2b. Ferromagnetic particles SUB2c may be separated from the abrasive grains during the cleaning.

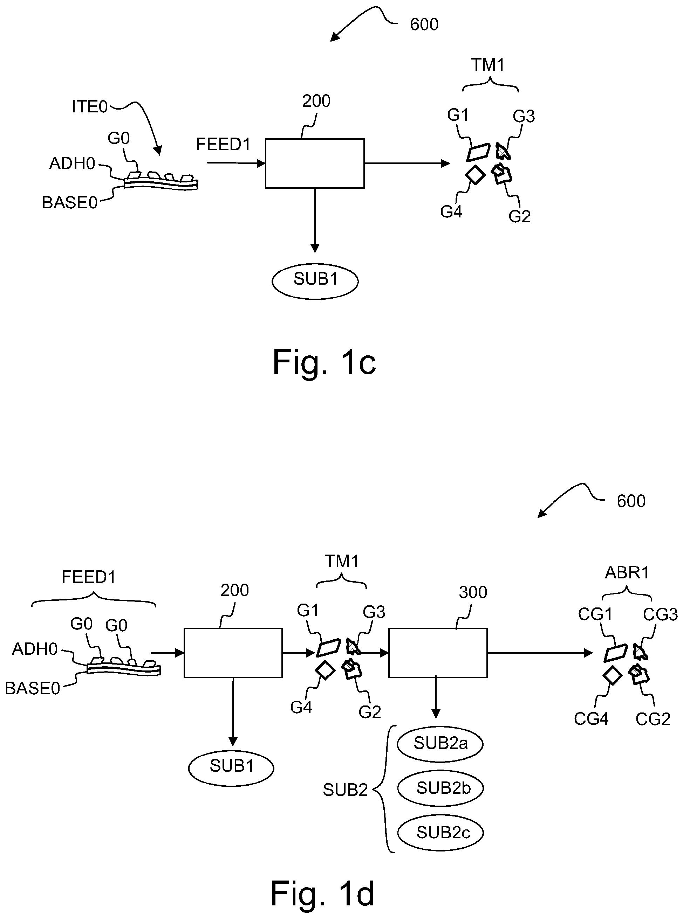

Referring to Fig. 1c, loose abrasive grains G1, G2, G3 and/or G4 may be provided by combusting input material FEED1 in a fluidized bed reactor 200. G2 denotes grains, which comprise a deposited mineral layer. G3 denotes grains consisting essentially of slag. G4 denotes grains formed by treating mineral particles in the fluidized bed.

According to the present invention, loose abrasive grains G1, G2, G3, G4 are provided by a method, which comprises:
- providing first input material FEED1, which comprises abrasive grains G0 adhered to a combustible substrate BASEO, and
- separating the abrasive grains G0 from the substrate BASE0 by at least partly combusting the substrate BASE0 in a fluidized bed BED1.

Treated material TM1 comprising loose abrasive grains G1, G2, G3, and/or G4 may be provided by a method, which comprises:
- providing first input material FEED1, which comprises abrasive grains G0 adhered to a combustible substrate BASEO, and
- separating the abrasive grains G0 from the substrate BASE0 by at least partly combusting the substrate BASE0 in a fluidized bed BED1.

Referring to Fig. 1d, cleaned grains CG1, CG2, CG4, and/or CG4 may be provided from the treated material TM1. CG2 denotes grains obtained by cleaning particles CG2. CG3 denotes grains obtained by cleaning particles G3. CG4 denotes grains obtained by cleaning particles G4.

The production apparatus 600 may comprise a cleaning unit 300 for producing cleaned grains CG1, CG2, CG4, and/or CG4 from the treated material TM1. The cleaning unit 300 may comprise e.g. a washing unit 320 (Fig. 4). The apparatus 600 may be arranged to produce abrasive material ABR1, which comprises cleaned abrasive grains CG1, CG2, CG4, and/or CG4. In addition to the cleaned abrasive grains CG1, the cleaning unit 300 may provide one or more residual substances SUB2, e.g. ash particles SUB2a separated from the treated material TM1 and/or contaminated washing liquid SUB2b. Ferromagnetic particles SUB2c may be separated from the abrasive grains during the cleaning.

The treated material TM1 removed from the fluidized bed reactor 200 may comprise ash particles. At least a part of the ash may be removed from the treated material TM1 prior to one or more subsequent cleaning steps. The treated material TM1 may be cleaned by removing ash particles from the treated material TM1. The method may comprise preliminary cleaning, which comprises removing ash particles from the treated material TM1. The ash particles may be removed e.g. by sieving, by elutriation, by using a cyclone, and/or by washing. A part of the ash particles may be removed already in the fluidized bed.

In an embodiment, the treated material TM1 may be handled as an intermediate product. The treated material TM1 may be an intermediate product. The treated material TM1 may be e.g. handled, stored and/or transported before one or more subsequent cleaning steps. The treated material TM1 may be e.g. handled, stored and/or transported before subsequent cleaning in a cleaning unit 300. The treated material TM1 may be e.g. handled, stored and/or transported before subsequent cleaning in a washing unit 320. The mass fraction of loose ash particles in the treated material TM1 after the preliminary cleaning may be e.g. smaller than 50%, smaller than 10%, or even smaller than 1%. The total mass fraction of abrasive grains in the treated material TM1 after the preliminary cleaning may be e.g. higher than or equal to 50%, higher than or equal to 90%, or even higher than or equal to 99%. The total mass fraction means the sum of the mass fractions of the grains G1, G2, G4, and/or G4.

The method may comprise removing ash from the treated material TM1 such that the mass fraction of loose ash particles in the treated material TM1 is e.g. smaller than 50%, smaller than 10%, or even smaller than 1%. The method may comprise removing ash from the treated material TM1 such that the total mass fraction of abrasive grains in the treated material TM1 after the preliminary cleaning may be e.g. higher than or equal to 50%, higher than or equal to 90%, or even higher than or equal to 99%. The treated material TM1 may comprise loose abrasive grains G1, G2, G3, and/or G4 such that the mass fraction of loose ash particles in the treated material TM1 is smaller than 50%, smaller than 10%, or even smaller than 1%. The treated material TM1 may comprise loose abrasive grains G1, G2, G3, and/or G4 such that the total mass fraction of abrasive grains in the treated material TM1 after the preliminary cleaning may be e.g. higher than or equal to 50%, higher than or equal to 90%, or even higher than or equal to 99%.

The method comprises:
- providing input material FEED1, which comprises abrasive grains G0 adhered to a combustible substrate BASEO,
- providing loose abrasive grains G1, G2, G3, and/or G4 by separating the abrasive grains G0 from the substrate BASEO, by at least partly combusting the substrate BASE0 in a fluidized bed BED1, and
- providing treated material TM1, which comprises said loose abrasive grains G1, G2, G3, and/or G4 such that the total mass fraction of the abrasive grains in the treated material TM1 is higher than or equal to 50%, higher than or equal to 90%, or even higher than or equal to 99%.

The method may comprise:
- providing input material FEED1, which comprises abrasive grains G0 adhered to a combustible substrate BASEO,
- providing loose abrasive grains G1, G2, G3, and/or G4 by separating the abrasive grains G0 from the substrate BASEO, by at least partly combusting the substrate BASE0 in a fluidized bed BED1, and
- providing treated material TM1 by at least partly separating the loose abrasive grains G1, G2, G3, and/or G4 from ash particles such that the total mass fraction of abrasive grains in the treated material TM1 is higher than or equal to 50%, higher than or equal to 90%, or even higher than or equal to 99%.

The method may comprise:
- providing input material FEED1, which comprises abrasive grains G0 adhered to a combustible substrate BASEO,
- providing loose abrasive grains G1, G2, G3, and/or G4 by separating the abrasive grains G0 from the substrate BASEO, by at least partly combusting the substrate BASE0 in a fluidized bed BED1,
- providing treated material TM1 which comprises the loose abrasive grains such that the mass fraction of loose ash particles in the treated material TM1 is smaller than 50%, smaller than 10%, or even smaller than 1%.

The method may comprise:
- providing input material FEED1, which comprises abrasive grains G0 adhered to a combustible substrate BASEO,
- providing loose abrasive grains G1, G2, G3, and/or G4 by separating the abrasive grains G0 from the substrate BASEO, by at least partly combusting the substrate BASE0 in a fluidized bed BED1,
- providing treated material TM1 which comprises the loose abrasive grains G1, G2, G3, and/or G4, and
- removing ash from the treated material TM1 such that the mass fraction of loose ash particles in the treated material TM1 is smaller than 50%, smaller than 10%, or even smaller than 1%.

Soft residues and weakly bound ash particles may be subsequently removed from the grains G1, G2, G3, and/or G4 e.g. by using more effective washing. Soft residues and weakly bound ash particles may be subsequently removed from the grains G1, G2, G3, and/or G4 e.g. by using acid washing.

The method may comprise:
- providing input material FEED1, which comprises abrasive grains G0 adhered to a combustible substrate BASEO,
- providing loose abrasive grains G1, G2, G3, and/or G4 by separating the abrasive grains G0 from the substrate BASEO, by at least partly combusting the substrate BASE0 in a fluidized bed BED1,
- at least partly separating the loose abrasive grains G1, G2, G3, and/or G4 from ash particles, and
- providing loose cleaned abrasive grains CG1, CG2, CG4, and/or CG4 by washing the loose abrasive grains G1, G2, G3, and/or G4.

The apparatus 600 may be arranged to produce abrasive material ABR1, which comprises cleaned abrasive grains CG1, CG2, CG4, and/or CG4. The mass fraction of loose ash particles in the abrasive material ABR1 may be very low. For example, the abrasive material ABR1 may be produced by cleaning the treated material TM1 such that the mass fraction of loose ash particles in the abrasive material ABR1 is smaller than 5%, smaller than 1%, or even smaller than 0.1%. For example, the abrasive material ABR1 may be produced by cleaning the treated material TM1 such that the total mass fraction of cleaned abrasive grains CG1, CG2, CG4, and/or CG4 in the treated material TM1 is greater than or equal to 95%, greater than or equal to 99%, or even greater than or equal to 99.9%.

The method may comprise:
- providing input material FEED1, which comprises abrasive grains G0 adhered to a combustible substrate BASEO,
- providing loose abrasive grains G1, G2, G3, and/or G4 by separating the abrasive grains G0 from the substrate BASEO, by at least partly combusting the substrate BASE0 in a fluidized bed BED1,
- providing the abrasive material ABR1 by washing the loose abrasive grains G1, G2, G3, and/or G4.

When using the treated material TM1 as an intermediate product, the method may comprise:
- receiving treated material TM1, which comprises loose abrasive grains G1, G2, G3, and/or G4 obtained by separating the grains from a substrate in a fluidized bed, and
- providing abrasive material ABR1 by washing the loose abrasive grains G1, G2, G3, and/or G4 of the treated material TM1.

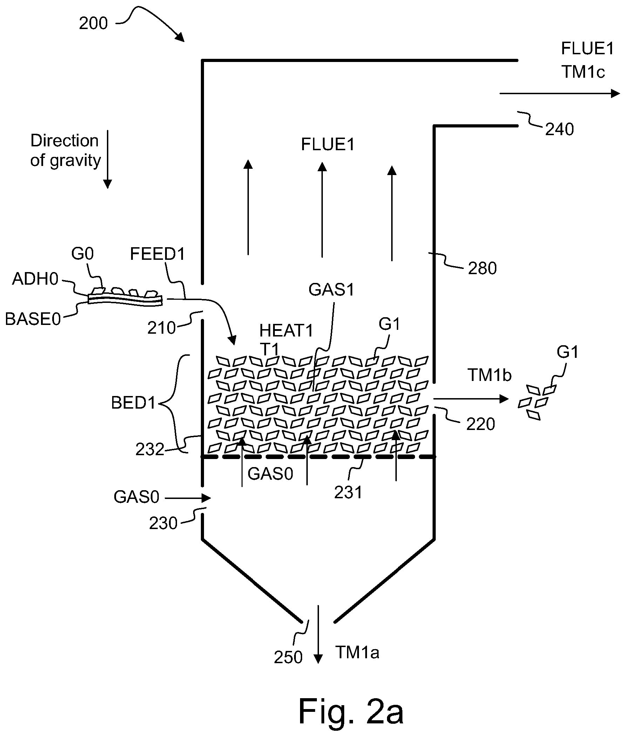

Referring to Fig. 2a, a fluidized bed reactor 200 may comprise a fluidized bed BED1, a container 232 for defining the lateral boundaries of the bed BED1, and a distributor 231 for distributing fluidization gas GAS0 into the bed BED1.

The bed BED1 may comprise a plurality of particles, including loose abrasive grains G1 obtained by combusting the input material FEED1. The bed BED1 may comprise abrasive particles, which have a predetermined size distribution. In addition to the abrasive particles, the bed BED1 may further comprise first input material FEED1, second input material FEED2 and/or ash. Depending on the relative amount of unburned material and ash, the total mass of abrasive particles contained in the bed BED1 may be e.g. higher than 90% of the total mass of the bed BED1, higher than 95% or even higher than 98% of the total mass of the bed BED1. The total mass of the bed BED1 may be e.g. in the range of 1 kg to 100 000 kg. The total mass of the bed BED1 may be e.g. in the range of 1 kg to 100 kg, 10 kg to 1000 kg, 100 kg to 10000 kg, or 1000 kg to 100000 kg.

The flow of the fluidization gas may cause particles of the bed to become suspended within the fluidization gas. The aerodynamic drag force of a particle may be substantially equal to the gravity force of said particle, at least in a portion of the bed BED1. The fluidization gas GAS0 may be guided to the distributor 231 e.g. via one or more openings 230. The fluidization gas GAS0 may be arranged to flow substantially upwards in the bed BED1. The fluidization gas GASO may comprise oxygen for the combustion. The fluidization gas GAS0 may be e.g. air, oxygen, oxygen-enriched air, or a mixture, which comprises air, oxygen and/or recirculated flue gas FLUE1.

The reactor 200 may comprise one or more openings 210 for feeding one or more input materials (FEED1) into the bed BED1.

Combustion in the bed BED1 may generate heat HEAT1, flue gas FLUE1 and/or ash. The heat HEAT1 generated by the combustion may be at least partly utilized for heating the bed BED1. The heat HEAT1 generated by the combustion may be at least partly utilized for sustaining the high temperature of the bed BED1. The average temperature T1 of the bed BED1 may be e.g. in the range of 650°C to 1100°C. The average temperature T1 of the bed BED1 may be e.g. in the range of 780°C to 950°C, in order to enable substantially complete combustion and in order to reduce the risk of forming large agglomerates due to sintering.

The heat HEAT1 may be at least partly generated by the combustion of the combustible part BASEO, ADH0 of the input material FEED1. For example, at least 20% of the heat HEAT1 may be generated by the combustion of the combustible part BASEO, ADH0 of the input material FEED1. For example, at least 50% of the heat HEAT1 may be generated by the combustion of the combustible part BASEO, ADH0 of the input material FEED1. The temperature T₁ of the bed BED1 may be sustained by combusting the combustible part BASEO, ADH0 of the input material FEED1.

The heat HEAT1 generated by the combustion of the input material FEED1 may also be used e.g. for generating steam and/or electricity. The fluidized bed reactor 200 may be a fluidized bed furnace.

Combustion in the bed BED1 may also generate reactive gas GAS1. A portion of the bed BED1 may be exposed to the reactive gas GAS1. The reactive gas GAS1 react with the particles of the bed and/or with minerals deposited on the particles.

The reactor 200 may comprise one or more openings 220 for extracting treated material TM1b from the reactor 200. The treated material TM1b may comprise particles of the bed BED1. In particular, the treated material TM1b may comprise treated abrasive grains.

The flue gas FLUE1 produced by the combustion may be guided from the bed BED1 via a freeboard 280 and via a gas duct 240. Treated material TM1c may be carried away from the bed BED1 by the flue gas FLUE1. The treated material TM1c may comprise fine particles and fly ash. The treated material TM1c may be subsequently separated from the flue gas FLUE1 e.g. by using a cyclone and/or a filter. Treated material TM1a may be extracted from the bed BED1 via the bottom part of the reactor 200. Treated material TM1a may be extracted from the bed BED1 e.g. via the distributor 231. The treated material TM1a may comprise e.g. bottom ash, large particles and/or agglomerated particles. The treated material TM1a may be removed e.g. via an opening 250 located at the bottom of the reactor 200.

The minimum residence time of particles in the bed BED1 may be e.g. greater than or equal to 3 s. The average residence time of particles in the bed BED1 may be e.g. in the range of 3 s to 10⁵ s. The minimum residence time of particles in the bed BED1 may be e.g. greater than or equal to 2 s.

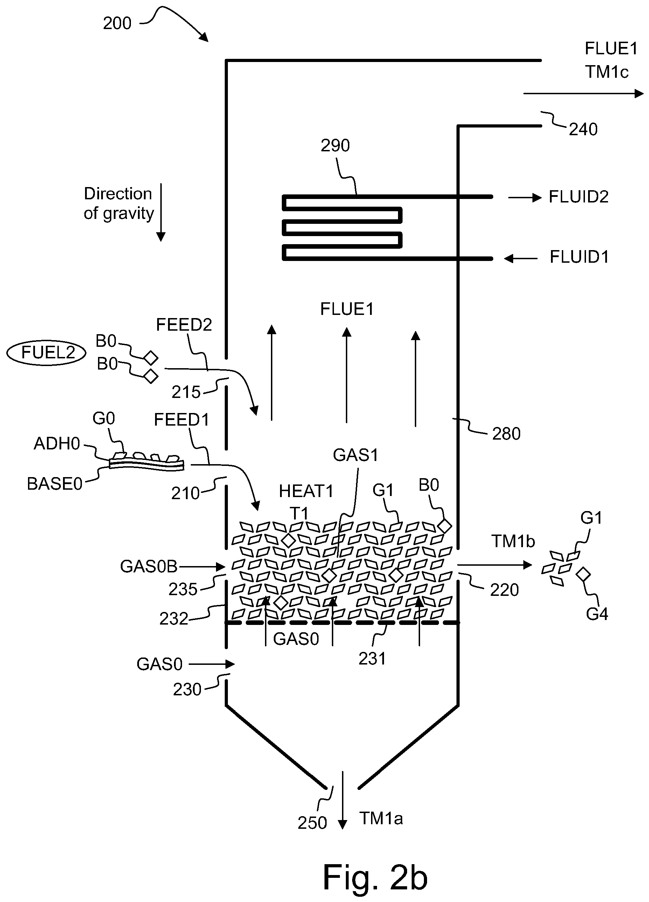

Referring to Fig. 2b, the reactor 200 may optionally comprise one or more openings 210, 215 for feeding second input material FEED2 into the bed BED1. The second input material FEED2 may comprise e.g. auxiliary fuel FUEL2 and/or mineral particles B0. The properties of the mineral particles B0 may be upgraded by treating them in the fluidized bed BED1. The particles B0 may be upgraded to a quality useable in an abrasive product. For example, the toughness of the particles B0 may be improved by treating the particles B0 in the hot fluidized bed BED1. The particles B0 may comprise alumina and titanium. The titanium may be in compound form and/or as ions in the crystal structure of alumina. The toughness of the particles B0 may be improved by treating the particles B0 at the elevated temperature of the bed BED1.

The second input material FEED2 may comprise ceramic particles B0. The ceramic particles B0 may be heat-treated and upgraded in the bed BED1 substantially simultaneously when combusting the first input material FEED1.

The second input material FEED2 may comprise low-grade mineral particles, which may be used as abrasive grains after they have been treated in the fluidized bed BED1 and washed with acid. For example, the mineral particles B0 of the second input material FEED2 may comprise abrasive particles, which do not fulfill one or more predetermined quality criterions. For example, the second input material FEED2 may comprise abrasive particles, which have a defective surface treatment. Treating the particles B0 in the hot fluidized bed BED1 may substantially remove the defective material layer from the particles B0. One or more defective material layers may be removed from the particles B0 e.g. when the particles B0 move against the other particles in the hot bed BED1.

The mass fraction of silica contained in the second input material FEED2 may be smaller than e.g. 5%, in order to avoid introducing excessive amounts of soft minerals into the treated material TM1 or TM1b. In an embodiment, the second input material FEED2 does not comprise silica sand.

One or more auxiliary fuels FUEL2 may be optionally combusted in the fluidized bed BED1 e.g. during initial heating of the bed BED1 and/or during combustion of the input material FEED1. The auxiliary fuel FUEL2 may comprise e.g. a combustible gas. The auxiliary fuel FUEL2 may be e.g. natural gas or liquified gas. The auxiliary fuel FUEL2 may comprise e.g. hydrogen, methane, ethane, propane and/or butane. The auxiliary fuel FUEL2 may comprise e.g. fuel oil, diesel oil, biodiesel, or kerosene. The auxiliary fuel FUEL2 may comprise e.g. pieces of plastic, fabric, and/or paper. The auxiliary fuel FUEL2 may comprise solid biofuel. The auxiliary fuel FUEL2 may comprise e.g. combustible wood. The composition of the auxiliary fuel FUEL2 may be selected such that combustion of the auxiliary fuel FUEL2 does not produce excessive amounts of ash and soft deposits, in order to avoid degrading the properties of the abrasive grains treated in the bed BED1.

The reactor 200 may optionally comprise one or more openings 235 for feeding secondary and/or tertiary gas (e.g. air) into the reactor 200, e.g. in order to control spatial temperature profiles in the reactor and/or in order to control NOₓ emissions. NOₓ may refer to nitric oxide (NO), and/or nitrogen dioxide (NO₂).

The reactor 200 may optionally comprise one or more heat exchangers 290 for transferring heat HEAT1 to a fluid. The heat exchangers 290 may be arranged to provide heated fluid FLUID2 by heating fluid FLUID1. The heated fluid FLUID2 may be utilized e.g. for heating a building or a material. For example, the heated fluid FLUID2 may be utilized for drying washed abrasive grains.

In an embodiment, the particle size of the particles B0 of the second input material FEED2 may be substantially equal to the particle size of the abrasive grains G0 of the first input material FEED1, in order to provide substantially similar fluidization properties.

For example, the mass median diameter of the particles (B0) of the second input material FEED2 may be e.g. in the range of 50% to 200% of the mass median diameter of the grains G0 of the first input material FEED1, in order to provide substantially similar fluidization properties. The size distribution of the particles B0 may be selected according to the particle size distribution of the grains G0 of the input material FEED1 such that the mass median diameter of the particles B0 is in the range of 50% to 200% of the mass median diameter of the grains G0.

For example, the mass median diameter of the particles B0 of the second input material FEED2 may be e.g. in the range of 25% to 400% of the mass median diameter of the grains G0 of the first input material FEED1 in order to provide similar fluidization properties. The size distribution of the particles B0 may be selected according to the particle size distribution of the grains G0 of the input material FEED1 such that the mass median diameter of the particles B0 is in the range of 25% to 400% of the mass median diameter of the grains G0.

Certain grit sizes may sometimes be more popular than the other grit sizes. The demand for a first grit size may be greater than the demand for a second grit size. For example, the demand for abrasive material of the grit size P80 may often be higher than the demand for abrasive materials of the other grit sizes. The mass fraction of the grit size P80 in the treated material TM1b may be increased e.g. by using second input material FEED2, which comprises a high mass fraction of mineral particles B0 of the grit size P80. The method for producing abrasive material may comprise feeding the second input material FEED2 into the fluidized bed, treating the mineral particles B0 in the fluidized bed BED1, and extracting treated material TM1b, which comprises treated mineral particles B0. The treatment may improve the grinding properties of the mineral particles B0 so that the treated mineral particles B0 may be used as abrasive grains. The treatment may cause conversion of mineral particles B0 of the grit size P80 into abrasive grains having substantially the same grit size P80. The grit size P80 may substantially correspond to particle sizes, which are in the range of 180µm to 212µm.

The input material FEED2 may comprise mineral particles B0 of a predetermined grit size, wherein the mass fraction of the mineral particles B0 of said predetermined grit size in the input material FEED2 may be higher than 50%, higher than 70% or even higher than 90%. Said predetermined grit size may be selected e.g. from the group consisting of the grit sizes P50, P60, P80, P100, and P120. In particular, said predetermined grit size may be P80.

During the combustion, the reactor 200 and the fluidized bed BED1 may be operated in the bubbling bed mode (bubbling FBC).

During the combustion, the reactor 200 and the fluidized bed BED1 may be operated in the circulating fluidized bed mode (CFB), where grains entrained into a high velocity gas flow may be recirculated via an external loop back into the bottom part of the reactor 200. The external loop may comprise a cyclone for separating particles of the bed BED1 from the gas flow.

The properties of the abrasive grains may be improved by treating the grains G0 in the fluidized bed BED1. Abrasive grains G1, G2 may be formed from the grains G0 by treating the grains G0 in the fluidized bed BED1. Abrasive grains G1, G2 may be formed from the first input material FEED1 by combusting the combustible part of the first input material FEED1 in the fluidized bed BED1. Abrasive grains G4 may be formed from particles B0 of the input material FEED2.

The first input material FEED1 and the second input material FEED2 may be introduced into the bed BED1 through different openings 210, 215, or through the same opening 210. The first input material FEED1 may optionally be mixed with the second input material FEED2 before introducing the materials FEED1, FEED2 into the bed BED1. A part of the first input material FEED1 may optionally be mixed with the second input material FEED2 before introducing the materials FEED1, FEED2 into the bed BED1. A part of the second input material FEED2 may optionally be mixed with the first input material FEED1 before introducing the materials FEED1, FEED2 into the bed BED1. For example, mineral and/or ceramic particles B0 may be mixed with combustible pieces of the used and/or worn abrasive items ITE0 of the first input material FEED1 before the particles B0 and the pieces are introduced into the bed BED1. For example, crushed combustible pieces of abrasive disks may be mixed with particles B0 of the second input material FEED2 before introducing the combustible pieces and the particles B0 into the bed BED1.

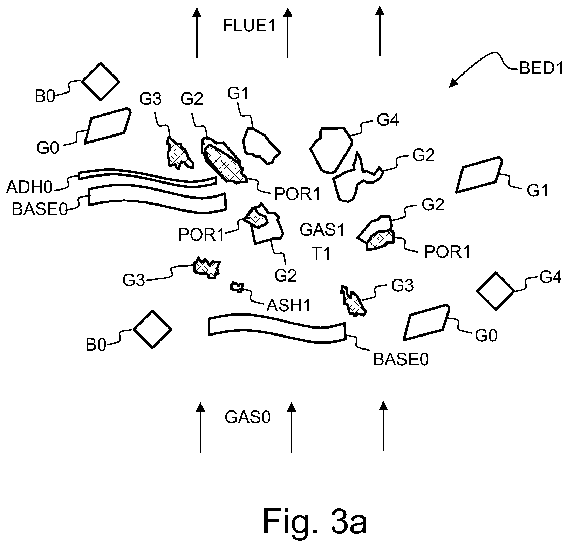

Referring to Fig. 3a, the hot fluidized bed BED1 may comprise abrasive particles G0 separated from the substrate BASE0 of the input material FEED1. The bed BED1 may comprise treated particles G1 obtained from the abrasive particles G0. The abrasive particles G0 may be converted into the treated particles G1 by treating the abrasive particles G0 at the elevated temperature of the bed BED1.

The composition of the abrasive particles G0, the average residence time of particles in the bed BED1 and the average temperature of the bed BED1 may be selected such that the heat treatment in the bed BED1 may increase the toughness of the treated particles G1 when compared with the abrasive particles G0 of the input material FEED1. The abrasive particles G0 may comprise fused alumina and titanium. The abrasive grains may comprise titanium e.g. as ions and/or as titanium compounds. The abrasive grains may comprise e.g. Ti³⁺ ions and/or Ti⁴⁺ ions contained in the crystal structure of aluminum oxide Al₂O₃. The abrasive grains may comprise e.g. titanium oxide TiO₂. The heat treatment may change the crystal structure of the abrasive particles G0. The heat treatment may change the crystal structure by causing a change of oxidation state of titanium contained in the crystal structure.

The heat treatment may cause e.g. partial conversion of brown fused alumina into blue fused alumina in the reactor 200.

During the combustion, the bed BED1 may temporarily comprise pieces of substrate BASE0 and pieces of adhesive ADH0.

The bed BED1 may comprise particles G2, which may be partially or completely covered with a mineral layer POR1 deposited on the particles G2. The deposited mineral layer may also be called e.g. as slag. A covered particle G2 may comprise a slag portion POR1. The slag may be formed e.g. from incombustible residues of the substrate BASE0 and/or from incombustible residues of the adhesive ADH0. The input materials FEED1, FEED2 may optionally comprise one or more auxiliary fuels, and the slag may be formed from incombustible residues of the one or more auxiliary fuels. Forming of coated particles G2 from the particles G0 may comprise keeping the particles G0 in slag-forming conditions in the hot fluidized bed BED1 so that the particles G0 may be at least partly covered with a mineral layer POR1. The slag-forming conditions mean conditions where incombustible residuals may be at least partly molten and deposited on the abrasive grains. The composition of the input materials FEED1, FEED2 and the average temperature T1 of the bed may be selected to cause deposition of minerals to the particles G0. The chemical composition of the covering mineral layer POR1 of a particle G2 may be substantially different from the chemical composition of the core of said particle G2. The hardness of the mineral layer POR1 may be e.g. greater than 7 Mohs. The hardness of the mineral layer POR1 may be e.g. greater than 7 Mohs after washing with acid.

The bed BED1 may comprise particles G3, which may substantially consist of mineral material formed from the incombustible residues. The particles G3 may be called e.g. as slag particles or as ash particles. The bed BED1 may comprise slag particles G3, which may substantially consist of slag formed from the incombustible residues.

The fluidized bed may have a relatively uniform temperature distribution, which may help to avoid e.g. melting of additives, fillers and other substances present in the input materials fed to the fluidized bed reactor. The controlled temperature distribution may reduce sintering and agglomeration of the grains in the bed.

Formation of large sintered clusters may disturb operation of the fluidized bed. The operating conditions of the fluidized bed BED1 may be selected so that minerals are deposited on the abrasive grains G2, wherein the abrasive grains G2 are not attached to each other to a significant degree.

The bed BED1 may comprise fine ash particles ASH1 and/or slag particles G3. The bed BED1 may comprise mineral particles B0 of the second input material FEED2. The BED1 may comprise treated particles G4 obtained from the mineral particles B0 by the heat treatment in the reactor 200. The BED1 may comprise treated particles G4 obtained from the mineral particles B0. In an embodiment, the particles G4 may be formed from the mineral particles B0 substantially without depositing a layer of mineral material on the particles B0 in the fluidized bed BED1.

In an embodiment, abrasive particles G4 may also be obtained when mineral particles B0 are at least partly coated with slag.

In an embodiment, the fluidized bed reactor may also be operated such that average temperature T1 of the bed exceeds a predetermined threshold value, in order to intentionally cause sintering of the grains.

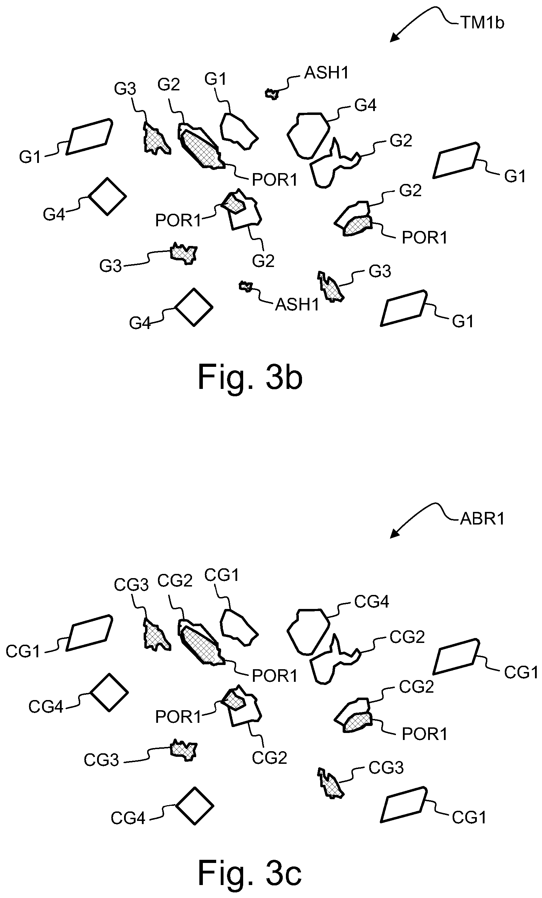

Referring to Fig. 3b, treated material TM1b extracted from the reactor 200 may comprise e.g. particles G1, G2, G3, G4, and ASH1.

Abrasive particles G4 may be formed from the mineral particles B0 by treating the mineral particles B0 in the fluidized bed BED1. The abrasive properties of the particles may be improved when the particles B0 are kept at the high temperature of the fluidized bed BED1, when the particles B0 are at least partly covered with hard slag, and/or when the particles B0 chemically react with one or more reactants present in the fluidized bed BED1.

Abrasive particles G4 may be formed from the particles B0 by a thermal treatment where the particles B0 are kept in the hot fluidized bed BED1 during a predetermined time period. The thermal treatment may cause e.g. relaxation of internal stress. Relaxation of internal stress may improve toughness of the particles. The thermal treatment may change crystal structure of the mineral particles B0. In particular, the thermal treatment may change the oxidation state of titanium contained in the crystal structure.

The values of Table 1 illustrate, by way of example, the difference between the chemical composition of untreated mineral particles B0 and the chemical composition of grains G4 obtained by treating and washing the particles B0 by sulfuric acid. The values of Table 1 were measured by x-ray fluorescence.

**Table 1: Mass fraction (% by weight) of elements in the surface layer of the untreated mineral particles B0 and treated and washed grains G4.**

| | Si | Ca | Ti | Fe | Zr | Al | K | Mn |
|---|---|---|---|---|---|---|---|---|
| B0 | 0.429 | 0.099 | 0.393 | 0.167 | 0.173 | 21.596 | 0.000 | 0.032 |
| G4 | 0.493 | 0.106 | 0.6 | 0.261 | 0.189 | 29.324 | 0.042 | 0.044 |

It may be noticed that the grains G4 have higher concentration of Ti, Fe, Al, K and Mn when compared with the untreated mineral particles B0.

Enrichment of alumina and/or titanium in the particles B0 may improve toughness of the particles. The thermal treatment in the bed BED1 may cause partial conversion of brown fused alumina grains into blue fused alumina grains.

The term "brown fused alumina" is a commercial name for alumina-based abrasive material, which contains more than 93% Al₂O₃, 2 to 4% TiO₂, and which may have a brownish color. The "brown fused alumina" may be produced e.g. by smelting of calcined bauxite.

The term "blue fused alumina" is a commercial name for alumina-based abrasive material, which contains more than 93% Al₂O₃, 2 to 4% TiO₂, and which has a blueish color. The crystal structure of the blue fused alumina may contain quadrivalent titanium ions (Ti⁴⁺). The presence of the quadrivalent titanium ions (Ti⁴⁺) may be an indication of improved grinding properties of the grains. The blueish color of the grains may be an indication of improved grinding properties of the grains. The presence of the quadrivalent titanium ions (Ti⁴⁺) may be an indication of a crystal structure, which provides improved grinding properties. The presence of the quadrivalent titanium ions Ti⁴⁺ may cause the blueish color of the grains. The blueish color may be caused e.g. by an electron transfer reaction between the titanium ion Ti⁴⁺ and an iron ion Fe²⁺.

Forming of abrasive particles G4 from the particles B0 may comprise keeping the particles B0 in slag-forming conditions in the hot fluidized bed BED1 so that the particles B0 may be at least partly covered with a mineral layer POR1. The slag-forming conditions mean conditions where incombustible residuals may be at least partly molten and deposited on the abrasive grains.

Abrasive particles G4 may be formed from the particles B0 when the particles B0 are at least partly covered with hard slag. The slag may increase roughness of the particles such that the abrasive particles G4 may be firmly attached to an adhesive ADH1 of an abrasive item ITE1. The slag may increase roughness of the particles such that the abrasive particles G4 may comprise a higher number of cutting edges (when compared with the initial particles B0).

An abrasive item ITE1 may be produced from abrasive material ABR1, which contains abrasive grains obtained from the fluidized bed BED1. The material of the particles B0 may be selected such that the presence of the particles B0 and/or G4 in the final product ITE1 does not significantly degrade the grinding efficiency of the final product ITE1.

The composition of materials (FEED1, FEED2, FUEL2) fed to the bed BED1 may be selected so as to avoid contamination of the bed BED1. The bed may be contaminated e.g. if the bed contains an excessive amount of substances, which cause agglomeration of the grains and/or which cause decreased performance of the final product (ABR1, ITE1).

The second input material FEED2 may have a low or zero concentration of silica (SiO₂) in order to reduce formation of soft slag. Soft slag might be formed e.g. when silica reacts with alkali compounds in the fluidized bed BED1. The mass fraction of silica in the second input material FEED2 may be e.g. smaller than or equal to 10%, advantageously smaller than 5%, and preferably smaller than 1%. The mass fraction of alumina in the second input material FEED2 may be high, respectively. For example, the mass of fused alumina contained in the second input material FEED2 may be greater than or equal to 90% of the total mass of incombustible substance of the second input material FEED2.

The mass fraction of silica in the fluidized bed BED1 may be e.g. smaller than or equal to 5%, advantageously smaller than 2%, and preferably smaller than 0.5%.

The materials FEED1, FEED2 and/or FUEL2 may comprise one or more substances, which promote formation of hard slag in the fluidized bed. For example, the first input material FEED1 and/or the second input material FEED2 may comprise one or more alkali compounds (e.g. K₂O, Na₂O) and one or more of the following substances:
- iron (Fe),
- iron oxide (Fe₂O₃),
- aluminum oxide in fine particles (e.g. in particles whose particle size is less than 50µm),
- titanium compound, in particular titanium dioxide (TiO₂),
- kaolinite (Al₂Si₂O₅(OH)₄),
- calcium oxide CaO.

Before the deposition, substances forming the surface layer of a grain G2, G3 may be carried in particles, whose size is less than the size of said grain G2, G3. Substances forming the surface layer may be carried in fine particles whose mass median diameter is smaller than the mass median diameter of the grains G2, G3.

The mineral material (i.e. slag) attached to the surface layer of the grains G2, G3 may be e.g. in substantially amorphous form. The mineral material may comprise e.g. fused silica SiO₂, aluminum oxide Al₂O₃, iron, and calcium. The concentration of silica SiO₂ in the surface layer of the grains may be e.g. in the range of 30% to 70% by weight, and the sum of the concentrations of iron and calcium may be e.g. in the range of 5% to 30%. The slag may comprise iron and the calcium e.g. as oxides (e.g. Fe₂O₃, CaO).

However, high amounts of silica (SiO₂) in the bed BED1 may cause excessive formation of soft slag and/or may degrade the properties of the treated material. The materials FEED1, FEED2, FUEL2 may be selected such that the mass fraction of silica in the bed BED1 may be kept a low level. The mass fraction of silica in the bed BED1 may be e.g. smaller than 10%. The mass fraction of silica contained in the incombustible granular material of the bed BED1 may be e.g. smaller than 10%.

The input material FEED1 and/or FEED2 may comprise particles G0, B0, which have a high concentration of fused alumina (Al₂O₃) and/or a high concentration of silicon carbide. The presence of alumina particles may reduce or prevent formation of soft slag in the fluidized bed BED1. The fraction of silica particles in the bed may also be decreased e.g. by increasing the fraction of alumina particles. Thus, the presence of alumina particles in the bed BED1 may reduce or prevent formation of soft slag in the fluidized bed BED1. The sum of the mass fractions of Al₂O₃ and SiC in the incombustible granular material of the bed BED1 may be e.g. greater than or equal to 50%, greater than or equal to 70%, or even greater than or equal to 90%. The incombustible granular material of the bed (BED1) may comprise fused alumina Al₂O₃ and/or silicon carbide SiC, the fused alumina Al₂O₃ may have a first mass, the silicon carbide SiC may have a second mass, and the sum of the first mass and the second mass may be greater than or equal to 50% of the total mass of the incombustible granular material of the bed BED1. The incombustible granular material of the bed (BED1) may comprise fused alumina Al₂O₃ and/or silicon carbide SiC, the fused alumina Al₂O₃ may have a first mass, the silicon carbide SiC may have a second mass, and the sum of the first mass and the second mass may be greater than or equal to 90% of the total mass of the incombustible granular material of the bed BED1.

The incombustible material of the bed BED1 may have a mass median diameter D₅₀, and particles larger than 10% of said mass median diameter D₅₀ may be classified to belong to the "granular material of the bed". Particles smaller than 10% of said mass median diameter D₅₀ do not belong to the "granular material" of the bed BED1, respectively.

The mass fraction of Al₂O₃ in the incombustible granular material of the bed BED1 may be greater than or equal to 50%, greater than or equal to 70%, or even greater than or equal to 90%. The mass fraction of Al₂O₃ in the granular material removed from the reactor 200 may be e.g. greater than or equal to 90%. The mass of Al₂O₃ contained in the granular material removed from the bed BED1 may be greater than or equal to 90% of the total mass of the granular material removed from the bed BED1. The mass fraction of Al₂O₃ in the treated material TM1b removed the bed BED1 may be e.g. greater than or equal to 90%. The mass fraction of SiC in the incombustible granular material of the bed BED1 may be e.g. greater than or equal to 50%, greater than or equal to 70%, or even greater than or equal to 90%.

The first input material FEED1 may e.g. comprise adhesive resin ADH0, which contains a titanium compound. The second input material FEED2 may comprise e.g. particles B0, which comprise fused alumina and titanium. The mass of fused alumina (Al₂O₃) contained in the second input material FEED2 may be e.g. greater than or equal to 50% of the total mass of incombustible substance of the second input material FEED2.

Referring to Fig. 3c, abrasive material ABR1 comprising cleaned particles may be obtained by cleaning the treated material TM1a, TM1b, and/or TM1c. Particles CG1 may be obtained by cleaning the particles G1. Particles CG2 may be obtained by cleaning the particles G2. Particles CG3 may be obtained by cleaning the particles G3 when the particles G3 comprise a high mass fraction of hard slag. However, the presence of soft particles in the produced abrasive material ABR1 may have an adverse effect on the grinding efficiency. Particles G3, which comprise a high mass fraction of soft slag may be substantially completely broken apart or dissolved when the treated material TM1a, TM1b, and/or TM1c is washed with acid. Particles G3, which comprise a high mass fraction of soft slag may be removed from the treated material TM1a, TM1b, and/or TM1c by acid washing. In particular, abrasive material ABR1 comprising cleaned particles may be obtained by cleaning treated material extracted from the bed BED1.

Particles CG4 may be obtained by cleaning the particles G4. Ash particles ASH1 and particle fragments may be removed from the treated material TM1b e.g. by elutriation.

The abrasive material ABR1 may have one or more of the following detectable features:
- The material ABR1 may comprise grains G1, which may comprise high concentrations of alumina (Al₂O₃) and/or titanium.
- The material ABR1 may comprise grains G2, which has been at least partly covered with slag.
- The material ABR1 may comprise slag particles G3.
- The material ABR1 may comprise silicon carbide particles.

These features may be detected e.g. by chemical analysis. The composition of the particles may be analyzed e.g. x-ray fluorescence and/or by x-ray diffraction.

Furthermore, the color of the abrasive material ABR1 may be different from the color of untreated reference material. The difference may be caused e.g. due to the silicon carbide contained in the material ABR1. The different color may be detected by comparing the color of the abrasive material ABR1 with the color of the untreated reference material. The comparison may be made e.g. by the naked eye or by machine vision.

Referring to Fig. 4, the cleaning may comprise washing the particles of the treated material TM1 in a washing unit 320. The cleaning may comprise washing the particles of the treated material TM1 with a liquid LIQ1. The cleaning may comprise washing the particles of the treated material with water. The cleaning may comprise washing the particles of the treated material with an aqueous solution. The cleaning may comprise washing the particles of the treated material with acid. The liquid LIQ1may comprise acid. The liquid LIQ1may comprise sulphuric acid. The washing may be assisted e.g. with ultrasonic vibrations. The washing may be performed at an elevated temperature e.g. in the range of 30°C to 300°C.

The abrasive material ABR1 may be produced by cleaning the fraction TM1b extracted from the fluidized bed BED1.

The cleaning may comprise washing the particles of the treated material TM1 with sulphuric acid. The washing may produce contaminated liquid SUB2b. The contaminated liquid SUB2b may comprise e.g. ash particles ASH1 and/or acid-soluble residues obtained from the particles G2, G3. Some slag particles G3 may be substantially completely dissolved in the acid.

The contaminated liquid SUB2b may be optionally purified and re-used as the liquid LIQ1.

In particular, the treatment in the fluidized bed BED1 followed by washing with acid LIQ1 may provide a tough and hard layer POR1 of slag on the particles CG2, CG3. The hardness of the mineral layer POR1 may be e.g. greater than 7 Mohs. The hardness of the mineral layer POR1 may be e.g. greater than 7 Mohs after washing with acid. The thickness of the mineral layer POR1 may be e.g. greater than 10 µm.

In an embodiment the slag layer POR1 attached to the particles CG2 may be classified to be a cermet layer (i.e. the coating may comprise ceramic-metallic composite material). Producing the abrasive material ABR1 may comprise providing abrasive grains CG2, which are at least partially coated with a ceramic-metallic layer POR1, wherein said layer is formed by combusting input material FEED1, FEED2 in the fluidized bed BED1 to form slag, and washing the slag with an acid.

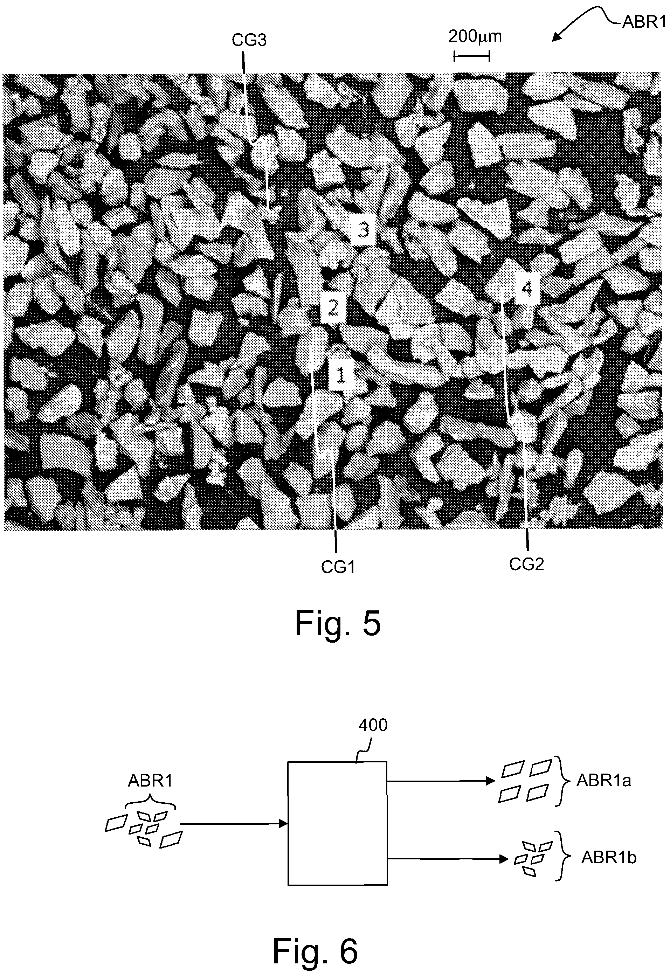

Fig. 5 shows, by way of example, a microscope image of particles of abrasive material ABR1 obtained by washing the treated material TM1b. The abrasive material ABR1 may comprise e.g. treated particles CG1, coated particles CG2, and slag particles CG3. The image of Fig. 5 has been captured by using an electron microscope. The numbers 1 to 4 indicate points subjected to chemical analysis by X-ray fluorescence.

Referring to Fig. 6, the abrasive material ABR1 may be separated into two or more portions ABR1a, ABR1b based on particle size. The portions ABR1a, ABR1b may be provided by a separating unit 400. The portions ABR1a, ABR1b may be provided e.g. by sieving. The sieving may be optionally assisted e.g. by vibration and/or by sedimentation techniques. A first portion ABR1a may have a first size distribution and a second portion ABR1b may have a second different size distribution. For example, the mass median diameter of the first portion ABR1a may be substantially greater than the mass median diameter of the second portion ABR1b.

If desired, the grains of the abrasive material ABR1 may be made smaller e.g. by crushing or milling.

The abrasive material ABR1 may comprise grains CG1, CG2, CG3, and/or CG4. The fraction ABR1a may comprise grains CG1, CG2, CG3, and/or CG4. The fraction ABR1b may comprise grains CG1, CG2, CG3, and/or CG4.

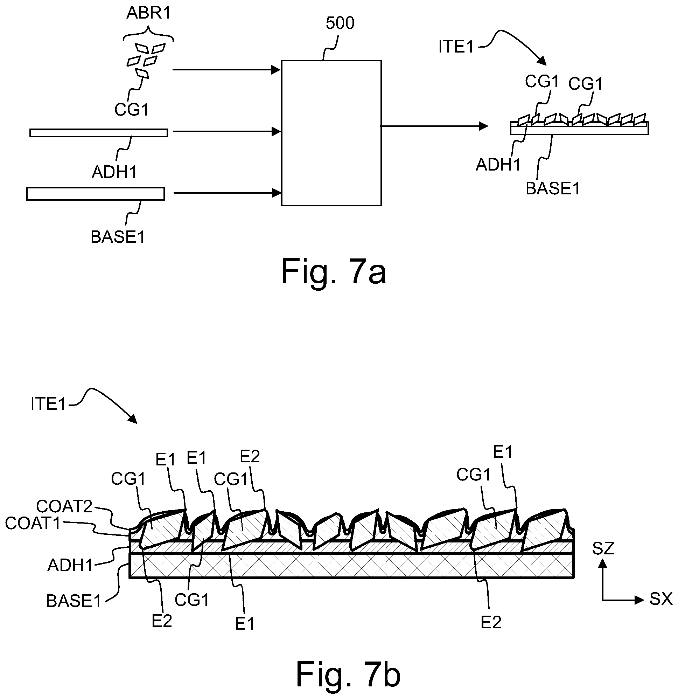

Referring to Fig. 7a, an abrasive item ITE1 may be produced e.g. by attaching a plurality of abrasive grains CG1, CG2, CG3, and/or CG4 of the abrasive material ABR1 to a substrate BASE1. The grains may be attached to the substrate BASE1 by an adhesive ADH1. A production unit 500 may be arranged to attach the grains to the substrate BASE1.

The abrasive grains may comprise e.g. aluminum oxide Al₂O₃, silicon carbide SiC, cubic boron nitride (c-BN), or diamond. The abrasive material ABR1 may be a heterogeneous mixture of two or more types of abrasive grains. For example, the abrasive material ABR1 may comprise first abrasive grains, which comprise aluminum oxide, and second abrasive grains, which comprise silicon carbide. The abrasive material may be a heterogeneous mixture, which comprises first abrasive grains and second abrasive grains, wherein the mass fraction aluminum oxide in the first abrasive grains may be greater than 90%, and the mass fraction of silicon carbide or boron nitride in the second abrasive grains may be greater than 90%.

The mass fraction of aluminum oxide in the abrasive material ABR1 may be e.g. greater than or equal to 95%, and the mass fraction of silicon carbide in the abrasive material ABR1 may be e.g. in the range of 0.1% to 5%

The abrasive material ABR1 or the produced item ITE1 may comprise first abrasive grains and second abrasive grains, wherein the mass fraction of fused alumina (Al₂O₃) in the first abrasive grains may be greater than 90%, the mass fraction of silicon carbide (SiC) in the second abrasive grains may be greater than 90%, and the mass of silicon carbide (SiC) may be in the range of 0.1% to 5% of the total mass of the abrasive grains of the abrasive product (ABR1, ITE1).

In particular, the abrasive grains may comprise fused aluminum oxide Al₂O₃ and titanium included in the crystal structure. The adhesive ADH1 may comprise e.g. a resin, glue and/or varnish. In particular, the adhesive ADH1 may comprise a phenolic resin and/or a urethane adhesive. The substrate BASE1 may comprise e.g. plastic film, a woven textile made from combustible fibers (i.e. cloth), paper, a sheet comprising vulcanized fibers. The substrate BASE1 may comprise one or more layers selected from the list above. The substrate BASE1 may be a flexible substrate.

The abrasive grains may be applied e.g. by using a mechanical method and/or by using an electrostatic method.

The abrasive item ITE1 may be e.g. an abrasive sheet, an abrasive roll, an abrasive belt, an abrasive disk, an abrasive pad, an abrasive cone, or a cutting disc. The item ITE1 may be e.g. a hollow drill, saw blade, or a cutting-off wheel. The item ITE1 may be e.g. a roll of abrasive-coated fabric or paper. The item ITE1 may be e.g. a jumbo roll. The item ITE1 may be e.g. a flexible abrasive product, which comprises abrasive grains attached to a supporting substrate by an adhesive. The item ITE1 may comprise abrasive grains, which are attached to the support BASE1 by an adhesive layer ADH1.

The abrasive grains of the item ITE1 may be sized or unsized. The term "sized" means that the grains have a specified average size and/or a specified size distribution. The specified size distribution may be relatively narrow. The term "unsized" means that the grains of the item ITE1 have not been selected according to size.

The abrasive item ITE1 may optionally comprise e.g. a hook fastener layer and/or a loop fastener layer so that the abrasive item ITE1 may be removably attached to a tool by a hook-and-loop joint. The abrasive item ITE1 may optionally comprise a layer of pressure-sensitive adhesive e.g. attaching the abrasive item ITE1 to a tool. The tool may be e.g. a power tool or a hand tool.

The abrasive material ABR1 may also be delivered as such e.g. to be used as sand for sand blasting. An amount of the abrasive material ABR1 may be stored and/or transported in a container. The mass of said amount may be e.g. greater than 0.1kg, greater than 1 kg, or greater than 10 kg. Said amount may comprise e.g. more than 10⁶ abrasive grains.

At a later stage, the abrasive item ITE1 or the abrasive material ABR1 may be used e.g. for creating a desired surface finish, for removing rust, for removing paint and/or for removing material. The abrasive item ITE1 or the abrasive material ABR1 may be used for grinding.

In an embodiment, the substrate BASE1 may also be arranged to operate as the adhesive ADH1. For example, the substrate BASE1 may comprise resin reinforced with fibers. For example, the grains may be partially buried in a plastic film. In an embodiment, the substrate BASE1 may also comprise incombustible material e.g. metal wires or filler particles.

Referring to Fig. 7b, the grains CG1, CG2, CG3, and/or CG4 of the abrasive item ITE1 may be optionally coated with a sizing layer COAT1 in order to further improve adhesion of the grains to the substrate BASE1. The grains and/or the sizing layer may be optionally coated with top coat layer COAT2. The top coat layer COAT2 may comprise e.g. a lubricant. The lubricant may be e.g. stearate. The lubricant may e.g. reduce the risk of clogging when the abrasive item ITE1 is later used for grinding.

E1 denotes a sharp edge, and E2 denotes a dull edge.

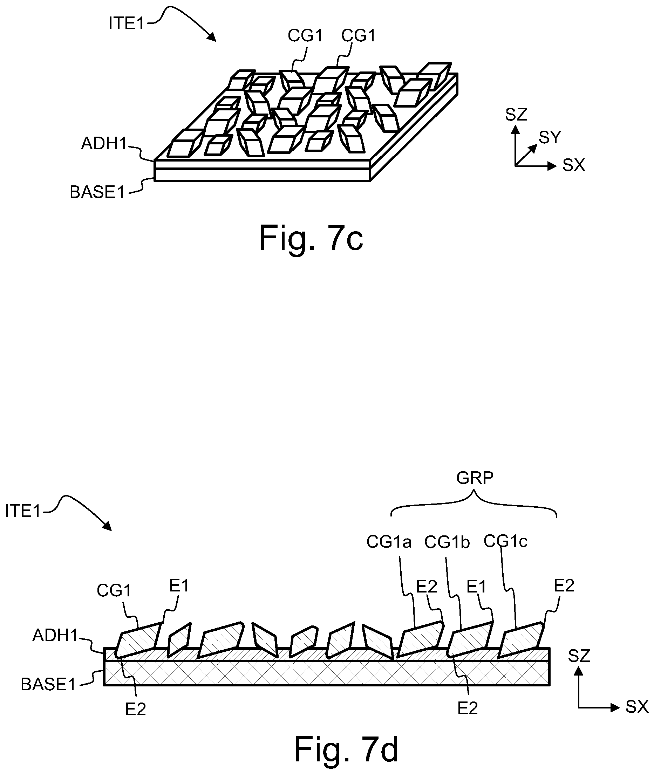

Fig. 7c shows, by way of example, an abrasive item ITE1 obtained by attaching grains of the abrasive material ABR1 to a substrate BASE1.

SX, SY and SZ denote orthogonal directions.

Referring to Fig. 7d, a new abrasive item ITE1 may comprise several abrasive grains, which have a dull edge E2 in addition to one or more sharp edges E1. The abrasive grains may be randomly oriented. Thus, a given dull edge of a given abrasive grain has a certain probability of being positioned as a protruding edge. Said dull edge of said abrasive grain has also a certain probability of being buried in the adhesive ADH1. Thanks to the random orientation of the grains, the new abrasive item ITE1 may have a high number of protruding sharp edges E1 even if said abrasive item ITE1 would comprise several dull edges E2.

The abrasive item ITE1 may comprise an abrasive grain, which comprises a sharp edge E1 and a dull edge E2. The dull edge E2 may have been formed e.g. when the protruding edges of the grains G0 of the input material FEED1 were used for grinding purposes. The dull edge E2 may have been formed e.g. when material was abraded away from the abrasive grain during grinding. The abrasive grains of the abrasive item ITE1 may be substantially randomly oriented.

The likelihood of burying a predetermined dull edge E2 in the adhesive ADH1 of the item ITE1 may be e.g. greater than or equal to 20%. The likelihood of positioning a predetermined grain such that it has a protruding sharp edge E1 may be e.g. greater than 66% in a situation where said predetermined grain has two or more sharp edges E1 but only one dull edge E2.

The abrasive item ITE1 may have a plurality of dull edges E2 buried in the adhesive ADH1. The abrasive item ITE1 may comprise a plurality of worn abrasive grains, wherein each worn abrasive grain has at least one dull edge E2 formed by grinding, and at least 20% of the dull edges formed by grinding E2 may be buried in an adhesive ADH1.

The abrasive item ITE1 may have a first grain CG1a having a dull protruding edge E2. The abrasive item ITE1 may have a second grain CG1b having a sharp protruding edge E1. The abrasive item ITE1 may have a third grain CG1c having a dull protruding edge E2. The grains CG1a, CG1b, CG1c may form a group GRP of three grains where the sharp protruding edge E1 is located between the dull protruding edges E2. The second grain CG1b may be next to the first grain CG1a and next to the third grain CG1c so that the second grain CG1b is located between the first grain CG1a and the third grain CG1c. Furthermore, the second grain CG1b may have a dull edge E2, which is buried in the adhesive ADH1. Said group GRP may be formed of treated grains CG1, slag-coated grains CG2, slag particles CG3 and/or upgraded mineral particles CG4.

The abrasive item ITE1 may comprise a plurality of sharp edges E1 located next to dull edges E2. The abrasive item ITE1 may comprise e.g. more than one hundred different groups GRP consisting of three abrasive grains CG1a, CG1b, CG1c, wherein each group GRP comprises a first grain CG1a having a dull protruding edge E2, a second grain CG1b having a sharp protruding edge E1, and a third grain CG1c having a dull protruding edge E2, wherein the three grains CG1a, CG1b, CG1c of each group are adjacent such that the second grain CG1b is located between the first grain CG1a and the third grain CG1c. Said groups GRP may be formed of treated grains CG1, slag-coated grains CG2, slag particles CG3 and/or upgraded mineral particles CG4. The groups GRP may be formed of treated grains CG1, slag-coated grains CG2, slag particles CG3 and/or upgraded mineral particles CG4.

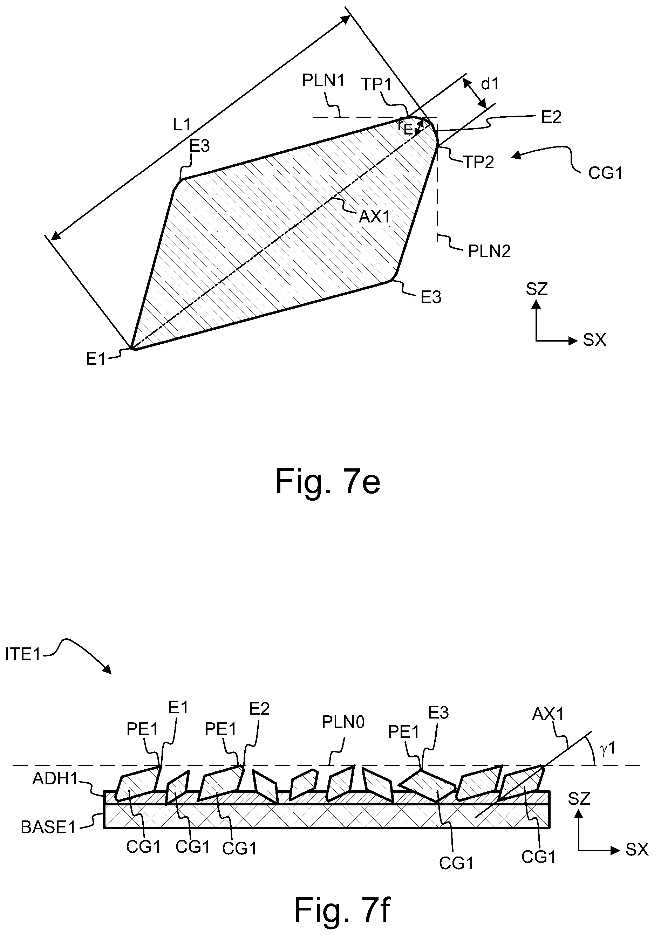

Referring to Fig. 7e, the sharpness of an edge E1, E2 of a grain CG1, CG2, CG3, or CG4 may be evaluated e.g. based on a transverse distance d1 between a first contact point TP1 and a second contact point TP2. The first contact point TP1 may be defined by a first tangential plane PLN1, and the second contact point TP2 may be defined by a second tangential plane PLN2. The first tangential plane PLN1 may be perpendicular to the second tangential plane PLN2. The first tangential plane PLN1 may touch the surface of the grain at the first contact point TP1. The second tangential plane PLN2 may touch the surface of the grain at the second contact point TP2. The edge associated with the distance d1 is located between the contact points TP1, TP2.

For example, an edge may be classified to a sharp edge E1 when the minimum transverse distance d1 of said edge is smaller than 1% of the length L1 of the grain. An edge may be classified to be a dull edge E2 when the minimum transverse distance d1 of said edge is in the range of 1% to 10% of the length L1 of the grain. An edge may be classified to be a blunt edge E3 when the minimum transverse distance d1 of said edge is greater than 10% of the length L1 of the grain.

The sharpness of an edge E1, E2 of a grain may also be expressed e.g. by providing the radius r_{E} of said edge. An edge may be classified to a sharp edge E1 e.g. when the minimum radius r_{E} of said edge is smaller than 1% of the length L1 of the grain. An edge may be classified to a dull edge E1 e.g. when the minimum radius r_{E} of said edge is greater than or equal to 1% of the length L1 of the grain.

The length L1 of the grain means the longest linear dimension of the grain. The length L1 may represent the longest possible distance between two edges of the grain. The grain has a longitudinal axis AX1, which is parallel to the longitudinal dimension L1. The orientation of the grain may be partly defined by specifying the orientation of the longitudinal axis AX1 of the grain. The grain does not need to symmetrical with respect to the longitudinal axis AX1.

Referring to Fig. 7f, the grains CG1, CG2, CG3, and/or CG4 of an abrasive item ITE1 may define a tangential plane PLNO. An individual grain may have several edges. A protruding edge PE1 of a grain may mean an edge, which is closest to the tangential plane PLNO, when compared to the other edges of said grain. The protruding edge PE1 may be a sharp edge E1, a dull edge E2, or a blunt edge E3. A plurality of protruding edges PE1 of an abrasive item ITE1 may be sharp edges E2, in order to provide high grinding efficiency. The protruding edge PE1 of an individual grain may also be a dull edge E2 or a blunt edge E3. The grinding efficiency may be reduced if a high fraction of the protruding edges PE1 of an item ITE1 are dull edges E2 and/or blunt edges E3.

The orientation of each grain of an abrasive item ITE1 may be defined by an inclination angle y1. The inclination angle γ1 of the grain may mean the angle between the tangential plane PLN0 and the longitudinal axis AX1 of the grain. The inclination angle γ1 may be in the range of 0° to 90°. If the inclination angle γ1 is equal to zero, this means that longitudinal axis AX1 is parallel to the tangential plane PLNO, and the grain may rests in a substantially horizontal position on the substrate BASE1. If the inclination angle γ1 is substantially equal to 90°, this means that the longitudinal axis AX1 is substantially perpendicular to the tangential plane, and the grain may stand substantially upright on the substrate BASE1.

The abrasive grains CG1, CG2, CG3, and/or CG4 may be transferred to the adhesive ADH1 e.g. by electrostatic strewing.

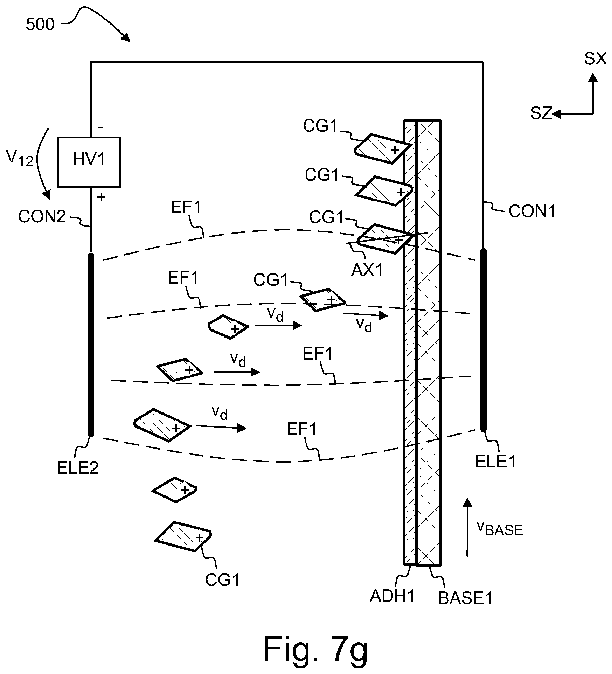

Referring to Fig. 7g, the orientation of the grains may be controlled e.g. by using an electric field EF1. The grains may be moved towards the substrate BASE1 such that the longitudinal axes AX1 of the grains are oriented substantially along the electric field EF1. Consequently, the grains attached to the substrate BASE1 may be substantially erect with respect to the substrate BASE1. The longitudinal axes AX1 of a plurality of grains attached to the adhesive ADH1 may be inclined or even substantially perpendicular to the tangential plane PLN0 of the produced item ITE1. For example, at least 70% of the grains attached to the substrate BASE1 may have inclination angles γ1 greater than 30°. In an embodiment, the orientations of the grains may be controlled by an electric field EF1 such that at least 70% of the grains attached to the substrate BASE1 may have inclination angles γ1 greater than 30°.

The grains may be moved towards the substrate BASE1 e.g. by the electric field EF1, by gravity, and/or by inertia. An individual grain may be moved towards the substrate BASE1 at a velocity v_{d}. The grains may move at different velocities.

The grains may have a positive or negative charge. The grains may be charged e.g. by touching the grains with a charged surface, and/or by exposing the grains to charged ions. The charged ions may be generated e.g. by a corona discharge. The electric field EF1 may be created e.g. by using a high voltage supply HV1 and by using two or more electrodes ELE1, ELE2. The electrodes ELE1, ELE2 may be connected to the high voltage supply HV1 e.g. by using conductors CON1, CON2. In an embodiment, the electric field EF1 may also be created e.g. by electrostatically charging the substrate BASE1.

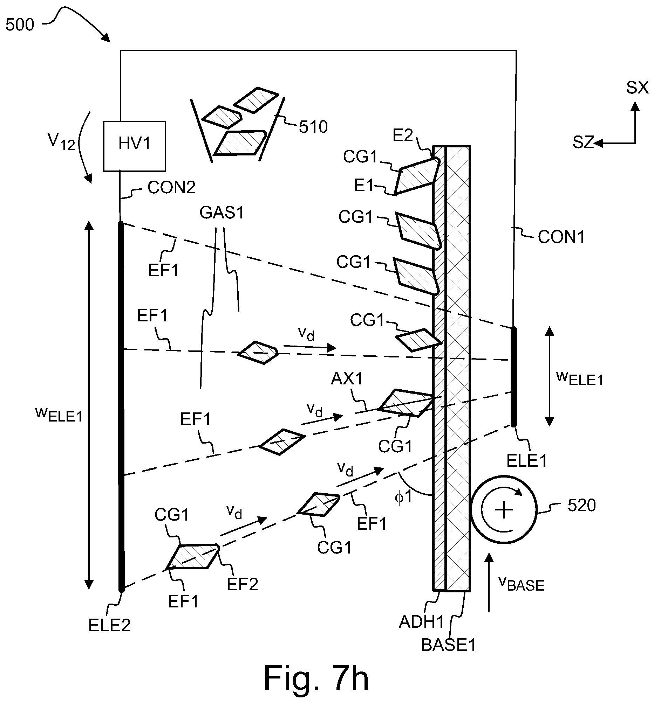

Referring to Fig. 7h, the grains CG1, CG2, CG3 and/or CG4 may be moved towards the substrate BASE1 by using a spatially non-uniform electric field EF1. The grains CG1, CG2, CG3 and/or CG4 may be brought into contact with the adhesive ADH1 by using the electric field EF1. The electric field EF1 may be formed by using two or more electrodes ELE1, ELE2. The grains may be brought to the space between the electrodes, and the electric field EF1 may move the grains towards the electrode ELE1. The grains may be moved towards the substrate BASE1 by dielectrophoresis. Consequently, the electrode ELE1 may attract the grains also when the grains do not carry a net charge. The adhesive ADH1 may be cured after the grains have been brought into contact with the adhesive ADH1 so that the grains may be permanently attached to the substrate BASE1.

The geometry of the electrodes may be selected such that the magnitude of the electric field EF1 may increase with decreasing distance from the first electrode ELE2. The spatially non-uniform electric field EF1 may be formed by applying a voltage (voltage difference) V₁₂ between a first electrode ELE1 and a second electrode ELE2. The voltage V₁₂ may be e.g. in the range of 0.5 kV to 1000 kV. The voltage V₁₂ may be selected according to the distance between the electrodes so as to avoid electric breakdown. The voltage V₁₂ may be e.g. a DC voltage or AC voltage. The frequency of the AC voltage may be e.g. in the range of 1 Hz to 1 MHz. The frequency of the alternating voltage may be in the range of 10 Hz to 1 kHz. The magnitude and the frequency of the AC voltage may be selected so as to provide effective transfer of grains onto the adhesive ADH1 and/or to provide desired orientations of the grains attached to the adhesive ADH1. The grains do not need to carry net charge when moving the grains by dielectrophoresis. The grains may be electrically neutral. When the grains moving in the gas do not carry net charge, changing the polarity of the (AC) voltage V₁₂ does not change the orientation of the grains.

The first electrode ELE1 may be implemented e.g. by using one or more conductive plates and/or one or more conductive wires. The second electrode ELE1 may be implemented e.g. by using one or more conductive plates and/or one or more conductive wires. The surface area of a second electrode ELE2 may be substantially greater than the surface area of a first electrode ELE2. For example, the first electrode ELE1 may be narrower than the second electrode ELE2. The grains CG1, CG2, CG3 and/or CG4 may comprise dielectric material, which may be polarized by the electric field EF1. The grains may be polarized by the electric field EF1.

The dielectric constant of the grains CG1, CG2, CG3 and/or CG4 may be different from the dielectric constant of the medium GAS1 in which the grains are moving. The medium GAS1 may be e.g. a gas, in particular air. The dielectric constant of the grains CG1, CG2, CG3 and/or CG4 may be greater than the dielectric constant of the medium GAS1. The substrate BASE1 together with the adhesive ADH1 may be positioned between the electrodes ELE1, ELE2. The substrate BASE1 and the adhesive ADH1 may be arranged to move in a direction SX during moving the grains CG1, CG2, CG3 and/or CG4 with the electric field EF1. w_{ELE1} may denote the dimension of the first electrode ELE1 in the direction (SX) of movement of the substrate BASE1, and w_{ELE2} may denote the dimension of the second electrode ELE2 in the direction (SX) of movement of the substrate BASE1. The dimension w_{ELE1} may be substantially smaller than the dimension w_{ELE2} in order to provide the spatially non-uniform electric field EF1.

When moving the grains by the dielectrophoresis, the orientation of the grains may be controlled by the electric field EF1 such that the longitudinal axis AX1 of the grains may be substantially aligned with the electric field EF1. The electric field EF1 may induce a dipole moment in a grain, and the interaction between the electric field and the dipole moment may turn the grain such that longitudinal axis AX1 of the grain may be substantially parallel to the direction of the electric field EF1. Aerodynamic forces may sometimes cause chaotic change of oriention of a grain when it is moving in the gas GAS1. The electric field EF1 may stabilize the longitudinal orientation of the grains when they are moving in the medium GAS1.

When moving the grains by the electric field EF1, the grains may be brought into contact with the adhesive ADH1 such that sharp edges E1 may remain as the protruding edges, and dull edges E2 may be buried in the adhesive ADH1. The electric field EF1 may move the grains such that a high number of the grains may have a sharp edge E1 as the trailing edge. The electric field EF1 may move the grains such that a high number of the grains may have a dull edge E2 as the leading edge. The electric field EF1 may move the grains such that a high number of the grains may have a dull edge E2 as the leading edge, and a sharp edge E1 as the trailing edge.

The grains may move with respect to the medium GAS1 (e.g. air). The grains may experience aerodynamic forces when they are moving with respect to the gas. The aerodynamic forces may promote an orientation where the aerodynamic drag coefficient of a grain is minimized and/or an orientation where the directional stability of the grain is high. In particular, the aerodynamic forces may promote an orientation where a sharp edge of a moving grain operates as the trailing edge of said moving grain. In other words, the sharp edge may operate as an aerodynamic fairing. The aerodynamic forces may, at least in a statistical sense, contribute to controlling the orientation of the grains such that the sharp edge E1 of a moving grain may operate as the trailing edge of said grain. The electric field EF1 may stabilize the orientation of the grains when they are moved with respect to the medium GAS1. The orientation of the grains may be controlled by the electric field EF1, and by the aerodynamic forces.

The electric field EF1 may cause electrostatic forces, which may have an effect on the orientation of the grains before they contact with the adhesive and/or after they have been attached to the adhesive. For example, the protruding edges of adjacent grains may repel each other due to dipole-dipole interactions induced by the electric field EF1. The protruding edges of adjacent grains may repel each other in a direction, which is perpendicular to the electric field EF1. The repulsion between the adjacent grains may facilitate providing the upright orientation for the grains.

The electric field EF1 may induce a dipole moment in a grain, and the interaction between the induced dipole moment and the electric field EF1 may push the protruding edge PE1 away from the substrate BASE1. Thus, the electric field EF1 may facilitate maintaining the upright orientation of the grains also after the grains have been attached to the substrate BASE1.

When moving the grains by the dielectrophoresis, the orientation of the grains may be controlled by the electric field EF1 such that the longitudinal axis AX1 of the grains may be substantially aligned with the electric field EF1. The electric field EF1 may be transverse with respect to the plane of the substrate BASE1. The angle ϕ1 between the direction of the electric field lines EF1 and the plane of the substrate BASE1 may be e.g. in the range of 40° to 90° in the region where the grains are brought into contact with the adhesive ADH1. The angle ϕ1 may depend on the position, i.e. the electric field lines of the electric field EF1 do not need to be parallel with respect to each other. The electric field EF1 may be substantially perpendicular to the adhesive ADH1 at the region where the grains are brought into contact with the adhesive ADH1.

The grains attached to the substrate BASE1 may be substantially erect with respect to the substrate BASE1. The longitudinal axes AX1 of a plurality of grains attached to the adhesive ADH1 may be inclined or even substantially perpendicular to the tangential plane PLN0 of the produced item ITE1. For example, at least 70% of the grains attached to the substrate BASE1 may have inclination angles γ1 greater than 30°. The orientations of the grains may be controlled by the electric field EF1 such that at least 70% of the grains attached to the substrate BASE1 may have inclination angles γ1 greater than 30°.

The voltage V₁₂ may be provided by a high voltage supply HV1. The electrodes ELE1, ELE2 may be connected to the high voltage supply HV1 e.g. by using conductors CON1, CON2. The high voltage supply HV1 may comprise e.g. a high voltage transformer, and the frequency of the voltage V₁₂ may be e.g. 50 Hz or 60 Hz.

The substrate BASE1 may be positioned e.g. above the grains. The grains may be lifted towards the substrate BASE1 by the electric field EF1. The grains may be lifted in a direction, which is substantially opposite the direction of gravity.

An individual grain may be moved towards the substrate BASE1 at a velocity v_{d}. The grains may move at different velocities.

The adhesive ADH1 may form a layer on top of the substrate BASE1 and/or the substrate BASE1 may be impregnated with the adhesive ADH1.

The production unit 500 may be arranged to attach abrasive grains to a substrate BASE1. The production unit 500 may comprise an electrostatic coater. The production unit 500 may comprise two or more electrodes ELE1, ELE2 and the voltage supply HV1. The production unit 500 may comprise a feeding unit 510 for bringing the grains into the space between the electrodes ELE1, ELE2. The feeding unit 510 may comprise e.g. a pneumatic conveyor, a vibrating conveyor and/or a conveyor belt. The production unit 500 may comprise a moving unit 520 for moving the substrate BASE1 with respect to the electrode ELE1. The moving unit 520 may comprise e.g. a roll rotated by a motor.

Referring back to Fig. 7b, the produced abrasive item ITE1 may be e.g. a flexible product, e.g. abrasive belt, or abrasive sheet. The grains CG1, CG2, CG3, and/or CG4 attached to the substrate BASE1 may be optionally coated with a sizing layer COAT1 and/or with a top coat layer COAT2. The abrasive item ITE1 may comprise:
- a substrate BASE1,
- an adhesive layer ADH1,
- a plurality of recovered abrasive grains,
- a size coat layer COAT1, and
- a top coat layer COAT2.

The sizing layer COAT1 may improve adhesion of the grains to the substrate BASE1. The sizing layer COAT1 may comprise adhesive and/or filler material. The top coat layer COAT2 may comprise e.g. lubricant in order to reduce the risk of clogging.

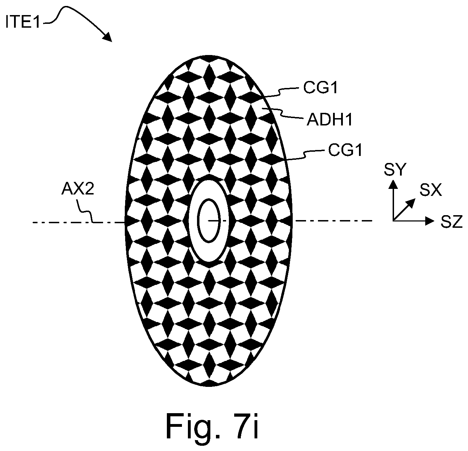

Referring to Fig. 7i, the produced abrasive item ITE1 may also be e.g. an abrasive wheel, an abrasive disk, or a cut-off wheel. The abrasive item ITE1 may be produced by providing a mixture, which comprises abrasive grains and binder material ADH1, and curing the binder material ADH1 of the mixture. The binder material ADH1 may comprise e.g. resin. The mixture may further comprise filler material particles. The abrasive item ITE1 may be optionally reinforced e.g. by ceramic fibers, glass fibers and/or metal wires. The produced disk or wheel ITE1 may comprise grains CG1, CG2, CG3 and/or CG4. The abrasive item ITE1 may provide a grinding action when it is rotated about an axis AX1. The abrasive wheel or disk may also be produced e.g. by coating a disk with the abrasive grains CG1, CG2, CG3 and/or CG4. The material of the disk may be e.g. metal, plastic, rubber, or a composite material. The composite material may comprise e.g. reinforcing particles and/or reinforcing fibers. The composite material may comprise e.g. organic or inorganic reinforcing fibers. The composite material may comprise e.g. organic or inorganic reinforcing particles.

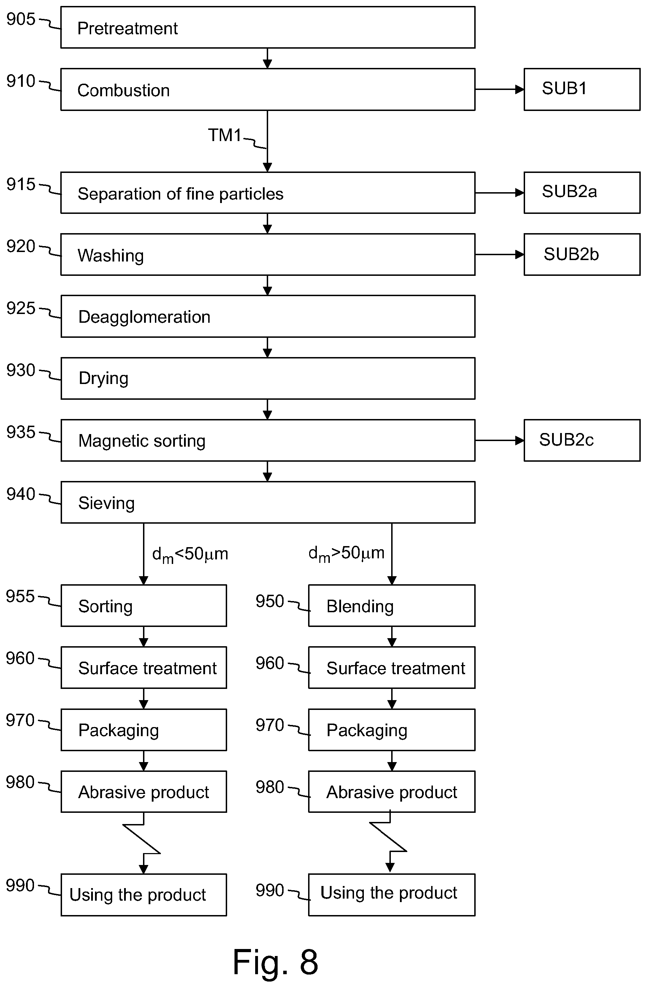

Fig. 8 shows method steps for producing abrasive items ITE1, which comprise recovered abrasive grains.

In step 905, the input material FEED1 may be pretreated. The pretreatment may comprise e.g. shredding, cutting, washing, sieving, magnetic separation and/or cleaning with a high velocity gas flow. For example, grinding dust attached to an abrasive cloth may be at least partially separated from the input material FEED1 by washing, sieving, magnetic separation and/or cleaning with an air blast. For example, an abrasive cloth may be cut and/or shredded into smaller pieces.

In step 910, the input material FEED1 may be combusted in a fluidized bed BED1. The combustible part of the input material FEED1 may be combusted in the fluidized bed BED1. Loose abrasive grains may be provided by combusting the substrates and/or adhesives of the input material FEED1 in the fluidized bed BED1.

The combustion may produce treated material TM1 and output substances SUB1. The treated material TM1 may comprise loose abrasive grains. The treated material TM1 may comprise fractions TM1a, TM1b, TM1c (Fig. 2a). A part of the output substances SUB1 may be handled as waste or used as a filler material. In an embodiment, the abrasive grains of the fraction TM1b may be subjected to further cleaning steps, wherein the fractions TM1a, TM1b may be handled as waste. The waste may be buried e.g. in a landfill or mixed as a filler with concrete or asphalt.

In an embodiment, the abrasive grains of the fraction TM1b may be subjected to further cleaning steps, wherein the fractions TM1a, TM1b may be handled as waste.

In an embodiment, also the abrasive grains of the fraction TM1a may be subjected to further cleaning steps e.g. in order to recover large abrasive grains. Also the abrasive grains of the fraction TM1c may be subjected to further cleaning steps e.g. in order to recover small abrasive grains. In an embodiment, the abrasive grains of all fractions TM1a, TM1b, TM1c may be subjected to further cleaning steps.

In step 915, small particles may be separated from the treated material TM1 e.g. by using a gas flow or a liquid flow. Small ash particles SUB2a may be separated from the treated material TM1 by using a gas flow or a liquid flow. For example, the treated material TM1 may be carried by a gas flow, wherein the small particles may be removed from the treated material TM1 by using a cyclone. The fine particles may be separated by elutriation, where a stream of gas or liquid may be arranged to flow in a direction, which is different from the direction of sedimentation. For example, a stream of gas may be arranged to flow upwards in a tube. The treated material TM1 may be introduced into the tube such that large abrasive particles may fall downwards, wherein the small particles may be carried upwards by the gas stream.

The abrasive material ABR1 may be produced from the treated material TM1 by cleaning. The cleaning may comprise washing. In step 920, the abrasive grains of the treated material TM1 may be cleaned by washing. The washing may comprise washing with an acid. The acid may be e.g. sulfuric acid and/or nitric acid. The washing may comprise washing with sulfuric acid. The washing may comprise washing with nitric acid. The washing may comprise washing with an acid, which comprises sulfuric acid and nitric acid. The washing with the one or more acids may cause etching. The washing with the one or more acids may etch soft minerals away from the grains.

The abrasive material ABR1 may be neutralized after washing with the acid. For example, the abrasive material ABR1 may be neutralized by washing with water, after the abrasive material ABR1 has been washed with the acid. The washing may produce residual substance SUB2b. The residual substance SUB2b may be e.g. contaminated acid. The contaminated acid may be optionally purified and re-used as a washing liquid LIQ1.

The washing may comprise washing with water. The washing may comprise washing with an aqueous solution.

The washing may remove small particles attached to abrasive grains. The washing may remove soluble residuals attached to the abrasive grains.

Washing with an acid may etch loosely bound substances away from the abrasive grains such that the substances remaining on the surfaces of the grains may be tough enough for grinding purposes. Washing with an acid may modify the chemical composition of the abrasive grains such that the grains may have improved toughness.

Etching of the grains with the one or more acids may locally remove e.g. silicon, iron and or calcium compounds. Etching with the one or more acids may increase surface roughness of the grains. Etching with the one or more acids may produce abrasive grains, which have a porous surface. The porous surface may consist of hard and/or tough materials. The porous surface of the grains may facilitate adhesion of the grains to the adhesive ADH1. The rough surface of the grains may facilitate adhesion of the grains to the adhesive ADH1. The treated grains may be more firmly attached to the adhesive and/or a thinner layer of adhesive needs to be used. Etching with the one or more acids may substantially simultaneously remove unwanted residues from the surface, improve mechanical properties of the surface, and improve adhesion properties of the surface. One or more mineral layers POR1 may have been attached to the grain CG1, CG2, CG3, CG4 during treating in the bed BED1. A portion of a mineral layer POR1 may be at least partly converted into a porous structure by etching. The produced abrasive grains CG1, CG2, CG3, and/or CG4, may have one or more porous surface portions POR1 formed by etching. Abrasive particles G1, G2, G3, G4 may be etched in order to form abrasive grains (CG1, CG2, CG3, CG4), which have one or more porous surface portions (POR1). A mineral layer deposited to the particles G1, G2, G3, G4 may be etched in order to form abrasive grains CG1, CG2, CG3, CG4, which have one or more porous surface portions POR1. The abrasive grains CG1, CG2, CG3, CG4 do not need to be fully covered with the porous surface portions POR1. The adhesion may be improved when some grains CG1, CG2, CG3, CG4 are at least partly covered with one or more porous surface portions POR1.

The treated material may comprise clustered particles, i.e. clusters. A cluster may comprise several abrasive grains, which have been attached to each other e.g. due to slag. In step 925, the clusters may be deagglomerated e.g. by crushing, by ultrasonic vibrations, and/or by milling. Deagglomeration means breaking the clusters in to pieces. Clusters may have a rough geometrical structure, which may provide effective grinding when a material is grinded by the clusters. However, the clusters should not be deagglomerated too easily during the grinding. Weakly bound clusters may be deagglomerated in step 925, in order to avoid unintentional breaking of the clusters during grinding. It is not necessary to deagglomerate strongly bound clusters.

In step 930, the abrasive material ABR1 may be dried. In an embodiment, the abrasive material ABR1 may be dried e.g. by using heat generated by the combustion, which takes place in the fluidized bed BED1.

The abrasive material ABR1 may comprise ferromagnetic particles, which may have been generated e.g. when the abrasive grains of the input material FEED1 have been used for grinding iron, steel, nickel alloy, or cobalt alloy. The input material FEED1 may also comprise pigments, which comprise iron compounds. Ferromagnetic particles may also be formed from these pigments during combustion in the fluidized bed BED1.

In an embodiment, an abrasive item ITE1 may be formed from the abrasive material ABR1 by using electrostatic coating, where electrically charged abrasive particles are transferred to a substrate by using electrostatic forces. Some ferromagnetic particles may be electrically conductive, and may disturb the electrostatic coating. Furthermore, if the abrasive material ABR1 or the abrasive item ITE1 comprises ferromagnetic particles, the presence of the ferromagnetic particles might sometimes involve a risk of contaminating the material to be grinded.

The ferromagnetic particles SUB2c may be magnetically separated from the abrasive material ABR1 in step 935. The ferromagnetic particles SUB2c may be used e.g. as an additive when making a metal alloy.

The abrasive material ABR1 may be divided into two or more fractions ABR1a, ABR1b based on particle size. In step 940, the abrasive material ABR1 may be divided into two or more fractions ABR1a, ABR1b by sieving. The average particle size dₘ of a first fraction ABR1a may be e.g. smaller than 50 µm, and the average particle size dₘ of a second fraction ABR1b may be e.g. greater than or equal to 50 µm.

The abrasive material ABR1 may be divided e.g. into two or more fractions ABR1a, ABR1b corresponding to grit sizes selected from the following group: P12, P16, P20, P24, P30, P36, P40, P50, P60, P80, P100, P120, P150, P180, P220, P240, P280, P320, P360, P400, P500, P600, P800, P1000, P1200, P1500, P2000. The grit range from P12 to P2000 approximately corresponds to particle sizes from 5 µm to 3400 µm.In particular, the abrasive material ABR1 may be divided e.g. into two or more fractions ABR1a, ABR1b corresponding to grit sizes selected from the following group: P40, P50, P60, P80, P100, P120, P150, P180, P220, P240, P280, P320, P360, P400.

In step 950, two or more fractions ABR1a, ABR1b may be optionally blended together to provide a fraction corresponding to the grit size selected from the following group: P12, P16, P20, P24, P30, P36, P40, P50, P60, P80, P100, P120, P150, P180, P220, P240, P280, P320, P360, P400, P500, P600, P800, P1000, P1200, P1500, P2000.

In step 955, a sieved fraction may be divided into further fractions ABR1a, ABR1b e.g. by wet classification, in particular by sedimentation sorting. Wet classification means a method where the particles are suspended in a liquid, a first fraction of the suspended particles has particles, whose settling velocity is in a first range, a second fraction of the suspended particles has particles, whose settling velocity is in a second different range, the particles are moved with respect to the liquid, and the first fraction is separated from the second fraction based on the difference between said first range and said second range.

In step 960, the grains of the abrasive material ABR1, ABR1a, ABR1b may be coated with a dielectric coating in order to facilitate electrostatic charging of the grains.

In step 970, the abrasive material ABR1, ABR1a, ABR1b may be optionally put in a container for storing and/or transportation. An amount of the abrasive material ABR1, ABR1a, ABR1b may be stored and/or transported in a container. The mass of said amount may be e.g. greater than 0.1 kg.

In step 980, one or more abrasive items may be manufactured from the abrasive grains of the abrasive material ABR1, ABR1a, ABR1b. The abrasive item may be e.g. a flexible abrasive cloth, a flexible abrasive paper, or a grinding stone. An abrasive item produced in step 980 may correspond e.g. to the grit size P40, P50, P60, P80, P100, P120, P150, P180, P220, P240, P280, P320, P360, or P400.

The grit size of the abrasive item ITE1 may be one of the following grit sizes: P12, P16, P20, P24, P30, P36, P40, P50, P60, P80, P100, P120, P150, P180, P220, P240, P280, P320, P360, P400, P500, P600, P800, P1000, P1200, P1500, and P2000. In particular, the grit size of the abrasive item ITE1 may be one of the following grit sizes: P40, P50, P60, P80, P100, P120, P150, P180, P220, P240, P280, P320, P360, and P400.

In step 990, the abrasive item may be used for grinding a material.

The method steps 905, 915, 925, 930, 935, 940, 950, 955, 960, 970, 980, 990 may be optional. The method steps 905 to 990 may also be carried out in a different order. For example, deagglomeration (step 925) may be carried out before washing in (920). For example, magnetic sorting (step 935) may be carried out before drying (step 930) or sieving (step 940). For example, surface treatment (step 960) may be carried out before sieving (step 940).

A first abrasive item may comprise abrasive grains treated in a fluidized bed. A reference abrasive item does not comprise abrasive grains treated in the fluidized bed. Prior to the treatment in the fluidized bed, the chemical composition and structure of the abrasive grains of the first abrasive item may have been substantially identical to the chemical composition and structure of the abrasive grains of a reference abrasive item. In an embodiment, the grinding efficiency of the first abrasive item may be e.g. higher than 105% of the grinding efficiency of the reference abrasive item. The improved grinding efficiency may be caused e.g. by improved toughness of the treated abrasive grains, by improved adhesion of the treated abrasive grains to the substrate and/or by more effective geometrical shape of the treated abrasive grains.

The grinding efficiency of an abrasive item may be specified e.g. by indicating the mass of material separated from a test material when the test material has been grinded by the abrasive item by using a predetermined relative velocity and predetermined pressure during a predetermined time. Grinding dust may be produced when a material is grinded by an abrasive item. The grinding dust may refer to particles separated from said material during the grinding.

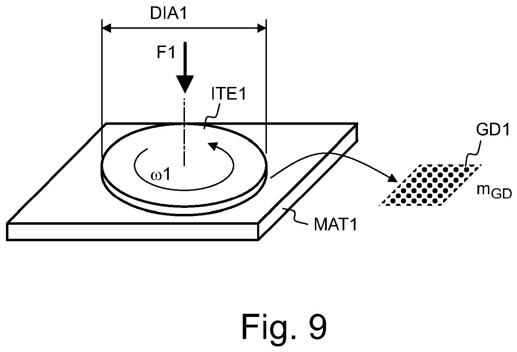

Fig. 9 shows, by way of example, a test set-up for measuring grinding efficiency. A rotating abrasive item ITE1 may be pressed against a test material MAT1 with a force F1. The abrasive item ITE1 may be rotated e.g. at an angular speed ω1. The abrasive item ITE1 may be e.g. a disk, which has a diameter DIA1. Grinding by the rotating abrasive item ITE1 may separate material GD1 from the test material MAT1. The separated material GD1 may have a mass m_{GD}.

Tests were made in order to measure the grinding efficiency of abrasive items ITE1, which comprise the abrasive material ABR1. The tests were made by using wood (beech), metal plates, and painted metal plates as the test material MAT1.

The abrasive material ABR1 was produced by combusting input material FEED1 in a fluidized bed BED1, and by subsequently washing the treated material TM1 extracted from the bed BED1. The input material FEED1 comprised pieces of flexible abrasive sheets ITE0. The sizes of the pieces were smaller than 10 cm x 10 cm. The input material FEED1 comprised abrasive grains G0. The pieces represented the grit sizes P60, P80, P120, P150 and P180, which cover the grain size range of 50 µm to 500µm. The abrasive grains G0 comprised aluminum oxide or silicon carbide, the substrate BASE0 was latex coated paper, the adhesive ADH0 was urea resin, and the abrasive sheets ITE0 comprised calcium sulfate as a filler material.

The input material FEED1 was combusted in a fluidized bed BED1, wherein the average temperature of the bed BED1 was kept in the range of 850°C to 860°C during the combustion. The treated abrasive grains G1 were separated by using a cyclone. The treated abrasive grains G1 were washed with water LIQ1 until no discoloring of the water LIQ1 could be visually detected. The washed abrasive grains were further subjected to a secondary washing in water, wherein the secondary washing was assisted by ultrasonic vibrations. The frequency of the ultrasonic vibrations was 21 kHz, and the amplitude of the ultrasonic vibrations was 83 µm. Ferromagnetic particles were magnetically separated from the cleaned grains. The resulting abrasive material ABR1 comprised cleaned recovered abrasive grains. The abrasive material ABR1 was fractionated into differed size fractions ABR1a, ABR1b according to the FEPA standard. After the fractionation, the abrasive grains were surface treated. Circular abrasive disks ITE1 were prepared by coating a latex coated base paper BASE1 with a base coat ADH1. The paper density of the base paper was approximately 156g/m². The density of the base coat was in the range of 13 g/m² to 17 g/m². The base coat comprised urea resin. The grains of the fractionated abrasive material ABR1a were electrically charged and electrostatically transferred to the coated paper substrate BASE1 in order to form abrasive items ITE1. In this example, the fraction ABRa represented the grain sizes from 90 µm to 130 µm. The average density of the grains on the paper was in the range of 73g/m² to 85g/m². The adhesive ADH1 was cured by keeping the abrasive items ITE1 at a temperature of 80°C during a time period of 20 minutes. The grains were subsequently coated with a sizing layer, which comprised urea resin. The sizing layer was cured by keeping the abrasive items ITE1 at a temperature of 80°C during a time period of 20 minutes. The density of the urea resin coating was in the range of 99 to 117 g/m². The sizing layer was further coated with stearate. The resulting abrasive sheets were subsequently cut to form substantially circular abrasive disks ITE1. The diameter DIA1 of the abrasive items ITE1 was 150 mm.

First grinding tests (TEST A) were made by using beech as the test material MAT1. A single test comprised four test cycles. A single abrasive item ITE1 was used for the four test cycles, where the duration of each cycle was 250 s, and the force F1 was 40 N. The total duration of a grinding test (TEST A) was 4 x 250 s. The same piece of beech MAT1 was grinded during the four test cycles of the single test.

Reference grinding tests (REFTEST A) were made by using reference abrasive items ITE0, which comprised Al₂O₃ abrasive grains, which were not treated in the fluidized bed. The other test conditions were the same as in the first grinding tests (TEST A).

Table 2 indicates the mass of material GD1 separated from the test plates during each test cycle. The mass of the separated material indicates the grinding efficiency.

**Table 2. Mass m_{GD} of grinding dust GD1 separated from beech plates during four consecutive test cycles (Al₂O₃ grains, test material = beech).**

| | Cycle 1 | Cycle 2 | Cycle 3 | Cycle 4 |
|---|---|---|---|---|
| REFTEST A | 9.9±0.1 g | 6.8±0.4 g | 5.7±0.4 g | 4.9±0.6 g |
| TEST A | 12.0±0.3g | 9.4±0.3 g | 8.2±0.2g | 7.3±0.1g |
| Difference | 17 to 25% | 26 to 52% | 31 to 58 % | 31 to 72% |

The measurement results of Table 2 indicate that the grinding efficiency of the abrasive items ITE1 may be substantially higher than the grinding efficiency of the reference abrasive items ITE0.

Second grinding tests (TEST B) were made by using metal plates and painted metal plates as the test materials MAT1. A single test comprised three test cycles. A single abrasive item ITE1 was used for the three test cycles, where the duration of each cycle was 45 s, and the force F1 was 45 N. The total duration of a grinding test (TEST B) was 3 x 45 s. Several test plates MAT1 were grinded during a single test so that each grinded test plate was replaced with a fresh one after 45 seconds of grinding. During the first cycle, a first painted plate was grinded. During the second cycle, an unpainted metal plate was grinded. During the third cycle, a second painted plate was grinded. The metal was unhardened carbon steel, and the paint was two-component paint available under the trade name "Standox Standofleet 2K-HS-Topcoat RAL". The initial thickness of the paint layer on the metal plates was 150 µm.

Reference grinding tests (REFTEST B) were made by using reference abrasive items ITE0, which comprised Al₂O₃ abrasive grains, which were not treated in the fluidized bed. The other test conditions were the same as in the second grinding tests (TEST B).

**Table 3. Mass m_{GD} of grinding dust GD1 separated from metal plates during consecutive test cycles (Al₂O₃ grains, test material = metal plates).**

| | Cycle 1 | Cycle 2 | Cycle 3 |
|---|---|---|---|
| REFTEST B | 3.7±0.1 g | 0.9±0.0 g | 2.5±0.1 g |
| TEST B | 4.6±0.1 g | 1.0±0.0 g | 2.8±0.1 g |
| Difference | 18 to 30% | 11% | 4% to 20% |

The measurement results of Table 3 indicate that the grinding efficiency of the abrasive items ITE1 may be substantially higher than the grinding efficiency of the reference abrasive items ITE0.

Third grinding tests (TEST C) were made by using abrasive items ITE1, which comprised silicon carbide SiC grains. The test material was beech. A single test comprised four test cycles. A single abrasive item ITE1 was used for the four test cycles, where the duration of each cycle was 250 s, and the force F1 was 40 N. The total duration of a grinding test TEST C was 4 x 250 s. The same piece of beech MAT1 was grinded during the four test cycles of the single test.

Reference grinding tests (REFTEST C) were made by using reference abrasive items ITE0, which comprised SiC abrasive grains, which were not treated in the fluidized bed. The other test conditions were the same as in the third grinding tests (TEST C).

**Table 4. Mass of grinding dust GD1 separated from metal plates during consecutive test cycles (SiC grains, test material = beech).**

| | Cycle 1 | Cycle 2 | Cycle 3 | Cycle 4 |
|---|---|---|---|---|
| REFTEST C | 9.0±0.2 g | 7.7±0.1 g | 7.2±0.1 g | 6.4±0.2 g |
| TEST C | 10.2±0.2 g | 9.4±0.2 g | 8.8±0.2 g | 8.3±0.1 g |
| Difference | 9 to 18% | 18 to 26% | 18 to 27% | 24 to 29% |

The measurement results of Table 4 indicate that the grinding efficiency of the abrasive items ITE1 may be substantially higher than the grinding efficiency of the reference abrasive items ITE0 when the abrasive items ITE1, ITE0 comprise silicon carbide grains.

The term "FEPA standard" may refer to the following standards:
FEPA-standard 43-1:2006: Grains of fused aluminium oxide, silicon carbide and other abrasive materials for coated abrasives Macrogrits P 12 to P 220.
FEPA-standard 43-2:2006 Grains of fused aluminium oxide, silicon carbide and other abrasive materials for coated abrasives Microgrits P 240 to P 2500
FEPA-Standard 42-1:2006: Grains of fused aluminium oxide, silicon carbide and other abrasive materials for bonded abrasives and for general industrial applications Macrogrits F 4 to F 220
FEPA-Standard 42-2:2006: Grains of fused aluminium oxide, silicon carbide and other abrasive materials for bonded abrasives and for general industrial applications Microgrits F 230 to F 2000
FEPA means "Federation of European Producers of Abrasives".

The term "toughness" may mean the property of a material to withstand an impact without fracturing.

The abrasive item ITE1 may be suitable for grinding, polishing, buffing, honing, cutting, drilling, sharpening, lapping, sanding, and/or abrasive machining. The term "grinding" may include e.g. one or more of the following actions: grinding, polishing, buffing, honing, cutting, drilling, sharpening, lapping, sanding, and/or abrasive machining.

An amount of abrasive material ABR1 may comprise abrasive grains, wherein the mass fraction of fused alumina Al₂O₃ in the grains may be greater than or equal to 95%, and the mass fraction of silicon carbide SiC in the grains may be e.g. in the range of 0.1% to 5% by weight. The grit size of said amount may be selected e.g. from a list consisting of the following grit sizes P12, P16, P20, P24, P30, P36, P40, P50, P60, P80, P100, P120, P150, P180, P220, P240, P280, P320, P360, P400, P500, P600, P800, P1000, P1200, P1500, and P2000. Said amount of abrasive material ABR1 may be used e.g. for grinding or sandblasting.

The terms "recovery" and "treating" may herein refer to a method, which comprises thermally treating abrasive grains in a hot fluidized bed, which has been at least partly heated by combustion of combustible parts of abrasive items. The term "recovered grains" may refer to grains separated from the first input material FEED1. The term "untreated" may refer to particles, which have not been thermally treated in a fluidized bed. The term "upgraded grains" may refer to grains which have been thermally treated in a fluidized bed such that the toughness of grains has been improved. The term "waste" may refer to material which the holder of said material discards, intends to discard or is required to discard. The term "waste grains" may refer to grains which have been used for grinding, to grains which have at least one dull edge, and/or to grains which do not fulfill one or more predetermined criterions.

The term "slag" may refer to mineral material, which has been deposited on the abrasive grains in the fluidized bed. The slag may remain firmly attached to the abrasive grains even after removal of the abrasive grains from the fluidized bed reactor. The slag may comprise amorphous material and/or polycrystalline material. The slag may be deposited on an abrasive grain e.g. when smaller mineral particles stick to the abrasive grain. The initial sizes of the mineral particles may be e.g. smaller than 10% of the initial size of the abrasive grain. Some mineral particles may be at least partly molten at the elevated temperature of the fluidized bed so that the mineral particles may become sticky. Some mineral particles may be sticky already prior to contacting with the abrasive grain. Some mineral particles may become sticky after contacting with the abrasive grain, i.e. when they are already in contact with the abrasive grain.

The materials FEED1, FEED2 and/or FUEL2 may contain a substance, which may operate as a fluxing agent in the fluidized bed. The fluxing agent may reduce the melting temperature of at least some mineral particles so that the mineral particles may become sticky. The fluxing agent may comprise e.g. iron, calcium, sodium and/or potassium. In particular, the fluxing agent may comprise metallic iron (Fe), rust particles (Fe₂O₃), calcium oxide (CaO) calcium carbonate (CaCO₃), and/or calcium hydroxide (Ca(OH)₂). The input material FEED1 and/or FEED2 may contain one or more substances, which may operate as fluxing agents in the fluidized bed.

The slag deposited on the abrasive grains may comprise one more regions, which are soluble in acid. The method may comprise washing the abrasive grains in a washing liquid so as to etch away the soluble regions, wherein the washing liquid may comprise acid. The washing liquid may comprise e.g sulphuric acid and/or nitric acid. The washing liquid may comprise aqueous sulphuric acid and/or aqueous nitric acid. The temperature of the washing liquid during the washing may be e.g. in the range of 0°C to 300°C, in particular in the range of 50°C to 200°C. For example, the soluble regions may be etched by using sulfuric acid and/or in nitric acid at the temperature of 25°C. For example, the soluble regions may be etched by using sulfuric acid and/or in nitric acid at a temperature which is in the range of 100°C to 200°C. For example, the soluble regions may be etched by using sulfuric acid at a temperature which is higher than 200°C. For example, the soluble regions may be etched by using sulfuric acid at a temperature which is higher than 250°C.

The deposited material which remains attached to the abrasive grains after etching with the acid may be tough and hard. The deposited material which remains attached to the abrasive grains after etching with the acid may be called e.g. as tough slag.

In an embodiment, an abrasive item ABR1 or a produced item ITE1 may comprise clusters, which consist of abrasive particles. An individual cluster may consist of two or more abrasive particles, which have been sintered together. The abrasive grains in the clusters may have been sintered together so firmly that the abrasive grains may remain attached to each other even after the soft mineral deposits have been etched away by using acid (e.g. H₂SO₄). For example, the abrasive item ABR1 or the produced item ITE1 may contain abrasive grains, wherein at least 90% of the mass of the abrasive grains may be in the particle size range from 50 µm to 1900 µm, and at least 5% of the mass of the abrasive grains may be in clusters, wherein each cluster may comprise two or more abrasive grains, which have been sintered together. Each cluster may comprise two or more abrasive grains CG1, CG2, CG3, CG4 which have been sintered together, and wherein the total mass of the abrasive clusters may be greater than 5% of the total mass of the abrasive grains CG1, CG2, CG3, CG4 of the abrasive product ABR1, ITE1.

The term "abrasive product" may mean abrasive material and/or an abrasive item. Abrasive items may also be called as abrasive articles. Abrasive material may mean material, which comprises abrasive grains or which consists of abrasive grains. For example, an amount of loose abrasive grains may be called as abrasive material. For example, abrasive cloth may be called as abrasive material. For example, a roll of abrasive cloth may also be called as an abrasive item or as an abrasive article.

In an embodiment, abrasive grains of an input material may already be loose, and it is not necessary to provide loose particles by combustion in the fluidized bed. The properties of the loose abrasive grains may be improved by a method, which comprises:
- providing treated grains by keeping the temperature of loose abrasive grains in a predetermined temperature range during a time period, and
- providing washed grains by washing the treated grains with and acid.

For example, loose abrasive grains of an input material may comprise fused alumina, and one or more impurities (e.g. titanium) contained in the crystal structure of the alumina. Treated grains may be formed from the loose grains by keeping the temperature of grains in a temperature range 780°C to 950°C during a time period, which is longer than a predetermined value. The predetermined value may be e.g. 3 seconds, 10 seconds, 100 seconds, 1000 seconds, or even longer than 10⁵ seconds. Washed grains may be provided by washing the treated grains with sulfuric acid. The washed grains may exhibit better adhesion to the adhesive ADH1 and/or the washed grains may have improved toughness, when compared the grains of the input material.

## Claims

1. A method for producing an abrasive item (ITE1), which comprises abrasive grains (CG1, CG2, CG3, CG4), wherein the abrasive grains (CG1, CG2, CG3, CG4) are provided by
providing first input material (FEED1), which comprises adhered abrasive grains (G0) adhered to a combustible material (BASE0), and
- by separating the adhered abrasive grains (G0) by at least partly combusting the combustible material (BASE0) in a fluidized bed (BED1),
**characterized in that** the combustible material (BASE0) is a combustible substrate, the first input material (FEED1) comprises adhered abrasive grains (G0) adhered to the combustible substrate (BASE0), wherein the method comprises providing separated abrasive grains (CG1, CG2, CG3, CG4) by separating the adhered abrasive grains (G0) from the substrate (BASE0) by at least partly combusting the combustible substrate (BASE0) in the fluidized bed (BED1), wherein producing the abrasive item (ITE1) comprises attaching the separated abrasive grains (CG1, CG2, CG3, CG4) to a second substrate (BASE1) such that the orientation of the abrasive grains (CG1, CG2, CG3, CG4) is at least partly controlled by using an electric field (EF1).

2. The method of claim 1 wherein the incombustible granular material of the bed (BED1) comprises fused alumina (Al₂O₃) and/or silicon carbide (SiC), the fused alumina (Al₂O₃) has a first mass, the silicon carbide (SiC) has a second mass, and the sum of the first mass and the second mass is greater than or equal to 50% of the total mass of the incombustible granular material of the bed (BED1).

3. The method of claim 1 or 2 wherein the mass of silica (SiO₂) in the incombustible granular material of the bed (BED1) is smaller than 10% of the incombustible granular material of the bed (BED1).

4. The method according to any of the claims 1 to 3 comprising:
- feeding the first input material (FEED1) into a fluidized bed reactor (200), and
- feeding a second granular input material (FEED2) into a fluidized bed reactor (200),
wherein the mass of fused alumina (Al₂O₃) contained in the second input material (FEED2) is greater than or equal to 50% of the total mass of incombustible substance of the second input material (FEED2).

5. The method according to any of the claims 1 to 4, wherein the fluidized bed (BED1) is at least partially heated by combustion of the combustible part (BASE0, ADH0) of the first input material (FEED1).

6. The method according to any of the claims 1 to 5, wherein the average temperature (T1) of the fluidized bed is in the range of 650°C to 1100°C, preferably in the range of 780°C to 950°C.

7. The method according to any of the claims 1 to 6, wherein the first input material (FEED1) comprises adhered abrasive grains (G0), which comprise fused alumina (Al₂O₃) and titanium, said titanium being in compound form and/or as ions contained in the crystal structure of the grain.

8. The method according to any of the claims 1 to 7, comprising introducing ceramic particles (B0) into the bed (BED1).

9. The method according to any of the claims 1 to 8, comprising introducing silicon carbide (SiC) into the bed (BED1).

10. The method according to any of the claims 1 to 9 comprising:
- removing separated abrasive particles (G1, G2, G3, G4) from the bed (BED1), and
- washing the separated abrasive particles (G1, G2, G3, G4) by an acid (H₂SO₄, HNO₃).

11. The method of claim 10 comprising etching the separated abrasive particles (G1, G2, G3, G4) with the acid (H₂SO₄, HNO₃) so as to form separated abrasive grains (CG1, CG2, CG3, CG4), which have one or more porous surface portions (POR1).

12. The method of claim 11 wherein the electric field (EF1) is spatially nonuniform so as to pull the separated abrasive grains (CG1, CG2, CG3, CG4) towards the substrate (BASE1).

13. The method of claim 11 or 12, wherein the first input material (FEED1) comprises a plurality of worn adhered abrasive grains (G0), wherein each worn adhered abrasive grain (G0) comprises a dull edge (E2).

14. The method according to any of the claims 1 to 13, wherein the combustible material (BASE0) is a flexible substrate material, which is at least partly combustible.

## Patentansprüche

1. Verfahren zur Herstellung eines Schleifartikels (ITE1), der Schleifkörner (CG1, CG2, CG3, CG4) umfasst, wobei die Schleifkörner (CG1, CG2, CG3, CG4) bereitgestellt werden durch
- Bereitstellen von erstem Eingangsmaterial (FEED1), das anhaftende Schleifkörner (G0) umfasst, die an einem brennbaren Material (BASE0) haften, und
- durch Trennen der anhaftenden Schleifkörner (G0) durch mindestens teilweises Verbrennen des brennbaren Materials (BASE0) in einem Wirbelbett (BED1), **dadurch gekennzeichnet, dass** das brennbare Material (BASE0) ein brennbares Substrat ist, das erste Eingangsmaterial (FEED1) an dem brennbaren Substrat (BASE0) anhaftende Schleifkörner (G0) umfasst, wobei das Verfahren das Bereitstellen getrennter Schleifkörner (CG1, CG2, CG3, CG4) durch Trennen der anhaftenden Schleifkörner (G0) von dem Substrat (BASE0) durch mindestens teilweises Verbrennen des brennbaren Substrats (BASE0) in der Wirbelschicht (BED1) umfasst, wobei das Herstellen des Schleifgegenstandes (ITE1) das Anbringen der getrennten Schleifkörner (CG1, CG2, CG3, CG4) an einem zweiten Substrat (BASE1), sodass die Ausrichtung der Schleifkörner (CG1, CG2, CG3, CG4) mindestens teilweise durch Verwendung eines elektrischen Feldes (EF1) gesteuert wird.

2. Verfahren nach Anspruch 1, wobei das unbrennbare körnige Material des Bettes (BED1) geschmolzenes Aluminiumoxid (Al₂O₃) und/oder Siliciumcarbid (SiC) umfasst, das geschmolzene Aluminiumoxid (Al₂O₃) eine erste Masse aufweist, das Siliciumcarbid (SiC) eine zweite Masse aufweist und die Summe der ersten Masse und der zweiten Masse größer oder gleich 50 % der Gesamtmasse des unbrennbaren körnigen Materials des Bettes (BED1) ist.

3. Verfahren nach Anspruch 1 oder 2, wobei die Masse des Siliziumdioxids (SiO₂) in dem unbrennbaren körnigen Material des Bettes (BED1) kleiner als 10 % des unbrennbaren körnigen Materials des Bettes (BED1) ist.

4. Verfahren nach einem der Ansprüche 1 bis 3, umfassend:
- Zuführen des ersten Eingangsmaterials (FEED1) in einen Fließbettreaktor (200), und
- Zuführen eines zweiten körnigen Eingangsmaterials (FEED2) in einen Fließbettreaktor (200),
wobei die Masse an geschmolzenem Aluminiumoxid (Al₂O₃), die in dem zweiten Eingangsmaterial (FEED2) enthalten ist, größer oder gleich 50 % der Gesamtmasse der nicht brennbaren Substanz des zweiten Eingangsmaterials (FEED2) ist.

5. Verfahren nach einem der Ansprüche 1 bis 4, wobei das Wirbelbett (BED1) mindestens teilweise durch Verbrennung des brennbaren Teils (BASE0, ADH0) des ersten Eingangsmaterials (FEED1) erhitzt wird.

6. Verfahren nach einem der Ansprüche 1 bis 5, wobei die durchschnittliche Temperatur (T1) des Wirbelbetts im Bereich von 650 °C bis 1100 °C, vorzugsweise im Bereich von 780 °C bis 950 °C liegt.

7. Verfahren nach einem der Ansprüche 1 bis 6, wobei das erste Eingangsmaterial (FEED1) anhaftende Schleifkörner (G0) umfasst, die geschmolzenes Aluminiumoxid (Al₂O₃) und Titan umfassen, wobei das Titan in Form einer Verbindung und/oder als Ionen in der Kristallstruktur des Korns enthalten ist.

8. Verfahren nach einem der Ansprüche 1 bis 7, umfassend das Einbringen von Keramikpartikeln (B0) in das Bett (BED1).

9. Verfahren nach einem der Ansprüche 1 bis 8, umfassend das Einbringen von Siliziumkarbid (SiC) in das Bett (BED1).

10. Verfahren nach einem der Ansprüche 1 bis 9, umfassend:
- Entfernen der abgetrennten Schleifpartikel (G1, G2, G3, G4) aus dem Bett (BED1), und
- Waschen der abgeschiedenen Schleifpartikel (G1, G2, G3, G4) mit einer Säure (H₂SO₄, HNO₃).

11. Verfahren nach Anspruch 10, umfassend das Ätzen der abgetrennten Schleifpartikel (G1, G2, G3, G4) mit der Säure (H₂SO₄, HNO₃), um getrennte Schleifkörner (CG1, CG2, CG3, CG4) zu bilden, die einen oder mehrere poröse Oberflächenabschnitte (POR1) aufweisen.

12. Verfahren nach Anspruch 11, wobei das elektrische Feld (EF1) räumlich ungleichmäßig ist, sodass es die abgetrennten Schleifkörner (CG1, CG2, CG3, CG4) in Richtung des Substrats (BASE1) zieht.

13. Verfahren nach Anspruch 11 oder 12, wobei das erste Eingangsmaterial (FEED1) eine Vielzahl von abgenutzten, anhaftenden Schleifkörnern (G0) umfasst, wobei jedes abgenutzte, anhaftende Schleifkorn (G0) eine stumpfe Kante (E2) umfasst.

14. Verfahren nach einem der Ansprüche 1 bis 13, wobei das brennbare Material (BASE0) ein flexibles Substratmaterial ist, das mindestens teilweise brennbar ist.

## Revendications

1. Procédé de production d'un élément abrasif (ITE1), qui comprend des grains abrasifs (CG1, CG2, CG3, CG4), dans lequel les grains abrasifs (CG1, CG2, CG3, CG4) sont fournis par
- la fourniture d'un premier matériau d'entrée (FEED1), qui comprend des grains abrasifs adhérents (G0) adhérant à un matériau combustible (BASE0), et
- par la séparation des grains abrasifs adhérents (G0) par la combustion au moins partielle du matériau combustible (BASE0) dans un lit fluidisé (BED1), **caractérisé en ce que** le matériau combustible (BASE0) est un substrat combustible, le premier matériau d'entrée (FEED1) comprend des grains abrasifs adhérents (G0) adhérant au substrat combustible (BASE0), dans lequel le procédé comprend la fourniture de grains abrasifs séparés (CG1, CG2, CG3, CG4) en séparant les grains abrasifs adhérents (G0) du substrat (BASE0) par la combustion au moins partielle du substrat combustible (BASE0) dans le lit fluidisé (BED1), dans lequel la production de l'élément abrasif (ITE1) comprend la fixation des grains abrasifs séparés (CG1, CG2, CG3, CG4) sur un deuxième substrat (BASE1) de sorte que l'orientation des grains abrasifs (CG1, CG2, CG3, CG4) est au moins partiellement commandée par l'utilisation d'un champ électrique (EF1).

2. Procédé selon la revendication 1 dans lequel le matériau granulaire incombustible du lit (BED1) comprend de l'alumine fondue (Al₂O₃) et/ou du carbure de silicium (SiC), l'alumine fondue (Al₂O₃) a une première masse, le carbure de silicium (SiC) a une seconde masse, et la somme de la première masse et de la seconde masse est supérieure ou égale à 50 % de la masse totale du matériau granulaire incombustible du lit (BED1).

3. Procédé selon la revendication 1 ou 2 dans lequel la masse de silice (SiO₂) dans le matériau granulaire incombustible du lit (BED1) est inférieure à 10 % du matériau granulaire incombustible du lit (BED1).

4. Procédé selon l'une quelconque des revendications 1 à 3 comprenant :
- l'introduction du premier matériau d'entrée (FEED1) dans un réacteur à lit fluidisé (200), et
- l'introduction d'un deuxième matériau d'entrée granulaire (FEED2) dans un réacteur à lit fluidisé (200), dans lequel la masse d'alumine fondue (Al₂O₃) contenue dans le deuxième matériau d'entrée (FEED2) est supérieure ou égale à 50 % de la masse totale de substance incombustible du deuxième matériau d'entrée (FEED2).

5. Procédé selon l'une quelconque des revendications 1 à 4, dans lequel le lit fluidisé (BED1) est au moins partiellement chauffé par la combustion de la partie combustible (BASE0, ADH0) du premier matériau d'entrée (FEED1).

6. Procédé selon l'une quelconque des revendications 1 à 5, dans lequel la température moyenne (T1) du lit fluidisé est comprise entre 650 °C et 1 100 °C, de préférence entre 780 °C et 950 °C.

7. Procédé selon l'une quelconque des revendications 1 à 6, dans lequel le premier matériau d'entrée (FEED1) comprend des grains abrasifs adhérents (G0), qui comprennent de l'alumine fondue (Al₂O₃) et du titane, ledit titane étant sous forme de composé et/ou sous forme d'ions contenus dans la structure cristalline du grain.

8. Procédé selon l'une quelconque des revendications 1 à 7, comprenant l'introduction de particules céramiques (B0) dans le lit (BED1).

9. Procédé selon l'une quelconque des revendications 1 à 8, comprenant l'ajout de carbure de silicium (SiC) dans le lit (BED1).

10. Procédé selon l'une quelconque des revendications 1 à 9 comprenant :
- l'élimination de particules abrasives séparées (G1, G2, G3, G4) du lit (BED1), et
- le lavage des particules abrasives séparées (G1, G2, G3, G4) par un acide (H₂SO₄, HNO₃).

11. Procédé selon la revendication 10 comprenant la gravure des particules abrasives séparées (G1, G2, G3, G4) avec l'acide (H₂SO₄, HNO₃) afin de former des grains abrasifs séparés (CG1, CG2, CG3, CG4), qui ont une ou plusieurs portions de surface poreuses (POR1).

12. Procédé selon la revendication 11 dans lequel le champ électrique (EF1) est spatialement non uniforme afin d'attirer les grains abrasifs séparés (CG1, CG2, CG3, CG4) vers le substrat (BASE1).

13. Procédé selon la revendication 11 ou 12, dans lequel le premier matériau d'entrée (FEED1) comprend une pluralité de grains abrasifs adhérents (G0) usés, dans lequel chaque grain abrasif adhérent (G0) usé comprend un bord émoussé (E2).

14. Procédé selon l'une quelconque des revendications 1 à 13, dans lequel le matériau combustible (BASE0) est un matériau de substrat flexible, qui est au moins partiellement combustible.
